(19) Europäisches Patentamt
European Patent Office
Office européen des brevets

(11) **EP 3 780 335 A1**

(12) **EUROPEAN PATENT APPLICATION**
published in accordance with Art. 153(4) EPC

(43) Date of publication:
**17.02.2021 Bulletin 2021/07**

(51) Int Cl.:
**H02J 50/05** (2016.01)     **H02J 50/70** (2016.01)

(21) Application number: **19778341.8**

(22) Date of filing: **28.03.2019**

(86) International application number:
**PCT/JP2019/013789**

(87) International publication number:
**WO 2019/189660 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2018  JP 2018062349**

(71) Applicant: **Panasonic Intellectual Property
Management Co., Ltd.
Osaka-shi, Osaka 540-6207 (JP)**

(72) Inventor: **KANNO, Hiroshi
Osaka-shi, Osaka 540-6207 (JP)**

(74) Representative: **Grünecker Patent- und
Rechtsanwälte
PartG mbB
Leopoldstraße 4
80802 München (DE)**

(54) **POWER TRANSMISSION MODULE, POWER RECEPTION MODULE, POWER TRANSMISSION DEVICE, POWER RECEPTION DEVICE, AND WIRELESS POWER TRANSFER SYSTEM**

(57) A power transmitting module includes a first electrode and a second electrode, which are a power transmitting electrode pair, and a matching circuit to be connected to the first and second electrodes. The matching circuit includes a first inductor connected to the first electrode, a second inductor connected to the second electrode, and a first capacitor. The first capacitor is connected between a wire between the first electrode and the first inductor and a wire between the second electrode and the second inductor. The power transmitting module further includes a second capacitor connected to the first inductor and a third inductor. The third inductor is connected between a wire between the first inductor and the second capacitor and a wire connected to the second inductor.

FIG. 7

EP 3 780 335 A1

## Description

## TECHNICAL FIELD

The present disclosure relates to a power transmitting module, a power receiving module, a power transmitting device, a power receiving device and a wireless power transmission system.

## BACKGROUND ART

In recent years, wireless power transmission techniques have been developed for transmitting electric power wirelessly, i.e., in a contactless manner, to a device with mobility such as a mobile telephone or an electric car. The wireless power transmission techniques include those of the electromagnetic induction method and those of the electric field coupling method. In a wireless power transmission system of the electric field coupling method, AC power is transmitted wirelessly from a pair of power transmitting electrodes to a pair of power receiving electrodes, with the pair of power transmitting electrodes and the pair of power receiving electrodes opposing each other. Patent Document No. 1 and Patent Document No. 2 disclose an example of such a wireless power transmission system of the electric field coupling method.

## CITATION LIST

## PATENT LITERATURE

Patent Document No. 1: International Publication WO2013/140665 pamphlet
Patent Document No. 2: Japanese Laid-Open Patent Publication No. 2010-193692

## SUMMARY OF INVENTION

## TECHNICAL PROBLEM

The present disclosure provides a technique for improving the power transmission characteristic of a wireless power transmission system of an electric field coupling method.

## SOLUTION TO PROBLEM

A power transmitting module according to one aspect of the present disclosure is used in a power transmitting device in a wireless power transmission system of an electric field coupling method. The power transmitting module includes: a first electrode and a second electrode, which are a power transmitting electrode pair; and a matching circuit to be connected between a power conversion circuit and the first and second electrodes in the power transmitting device. The power conversion circuit includes a first terminal and a second terminal and converts electric power output from a power source into AC power for transmission to output the converted power from the first and second terminals. The matching circuit includes: a first inductor connected to the first electrode; a second inductor connected to the second electrode; a first capacitor connected between a wire between the first electrode and the first inductor and a wire between the second electrode and the second inductor; a second capacitor connected to the first inductor; and a third inductor connected between a wire between the first inductor and the second capacitor and a wire connected to the second inductor. On an opposite side from the first electrode, the second capacitor is to be directly or indirectly connected to the first terminal of the power conversion circuit. On an opposite side from the second electrode, the second inductor is to be directly or indirectly connected to the second terminal of the power conversion circuit.

A power transmitting module according to another aspect of the present disclosure is used in a power transmitting device in a wireless power transmission system of an electric field coupling method. The power transmitting module includes: a first electrode and a second electrode, which are a power transmitting electrode pair; and a matching circuit to be connected between a power conversion circuit and the first and second electrodes in the power transmitting device. The power conversion circuit includes a first terminal and a second terminal and converts electric power output from a power source into AC power for transmission to output the converted power from the first and second terminals. The matching circuit includes: a first inductor connected to the first electrode; a second inductor connected to the second electrode; a first capacitor connected between a wire between the first electrode and the first inductor and a wire between the second electrode and the second inductor; a third inductor connected to the first inductor; and a second capacitor connected between a wire between the first inductor and the third inductor and a wire connected to the second inductor. On an opposite side from the first electrode, the third inductor is to be directly or indirectly connected to the first terminal of the power conversion circuit. On an opposite side from the second electrode, the second inductor is to be directly or indirectly connected to the second terminal of the power conversion circuit.

A power receiving module according to another aspect of the present disclosure is used in a power receiving device in a wireless power transmission system of an electric field coupling method. The power receiving module includes: a first electrode and a second electrode, which are a power receiving electrode pair; and a matching circuit to be connected between a power conversion circuit and the first and second electrodes in the power receiving device. The power conversion circuit includes a first terminal and a second terminal and converts AC power input to the first and second terminals into another form of electric power that is used by a load to output the converted power. The matching circuit includes: a first inductor connected to the first electrode; a second inductor connected to the second electrode; a first capacitor connected between a wire between the first electrode and the first inductor and a wire between the second electrode and the second inductor; a third inductor connected to the first inductor; and a second capacitor connected between a wire between the first inductor and the third inductor and a wire connected to the second inductor. On an opposite side from the first electrode, the third inductor is to be directly or indirectly connected to the first terminal of the power conversion circuit. On an opposite side from the second electrode, the second inductor is to be directly or indirectly connected to the second terminal of the power conversion circuit.

A power receiving module according to another aspect of the present disclosure is a power receiving module used in a power receiving device in a wireless power transmission system of an electric field coupling method, the power receiving module including: a first electrode and a second electrode, which are a power receiving electrode pair; and a matching circuit to be connected between a power conversion circuit and the first and second electrodes in the power receiving device. The power conversion circuit includes a first terminal and a second terminal and converts AC power input to the first and second terminals into another form of electric power that is used by a load to output the converted power. The matching circuit includes: a first inductor connected to the first electrode; a second inductor connected to the second electrode; a first capacitor connected between a wire between the first electrode and the first inductor and a wire between the second electrode and the second inductor; a second capacitor connected to the first inductor; and a third inductor connected between a wire between the first inductor and the second capacitor and a wire connected to the second inductor. On an opposite side from the first electrode, the second capacitor is to be directly or indirectly connected to the first terminal of the power conversion circuit. On an opposite side from the second electrode, the second inductor is to be directly or indirectly connected to the second terminal of the power conversion circuit.

The general and specific aspects of the present disclosure may be implemented using a device, a system, a method, an integrated circuit, a computer program or a storage medium, or any combination of systems, devices, methods, integrated circuits, computer programs and storage media.

## ADVANTAGEOUS EFFECTS OF INVENTION

The technique of the present disclosure improves the power transmission characteristic of a wireless power transmission system of the electric field coupling method.

## BRIEF DESCRIPTION OF DRAWINGS

FIG. **1** is a diagram schematically showing an example of a wireless power transmission system of the electric field coupling method.
FIG. **2** is a diagram showing a general configuration of the wireless power transmission system shown in FIG. **1.**
FIG. **3** is a diagram showing a system configuration according to a first comparative example.
FIG. **4** is a diagram showing a system configuration according to a second comparative example.
FIG. **5** is a schematic diagram of an electrode unit according to an exemplary embodiment of the present disclosure.
FIG. **6A** is a diagram showing a first configuration example of a matching circuit.
FIG. **6B** is a diagram showing a second configuration example of a matching circuit.
FIG. **6C** is a diagram showing a third configuration example of a matching circuit.
FIG. **6D** is a diagram showing a fourth configuration example of a matching circuit.
FIG. **7** is a diagram showing a configuration of a wireless power transmission system according to an exemplary embodiment of the present disclosure.
FIG. **8** is a diagram schematically showing a configuration example of two inductors.
FIG. **9** is a diagram schematically showing a configuration example of a power conversion circuit of a power transmitting device.
FIG. **10** is a diagram schematically showing a configuration example of a power conversion circuit of a power receiving device.
FIG. **11A** is a graph showing the dependence of the transmission characteristic of the configuration shown in FIG. **4** on the electrode-to-electrode gap.
FIG. **11B** is a graph showing the dependence of the transmission characteristic of the configuration shown in FIG. **7** on the electrode-to-electrode gap.
FIG. **11C** is a graph showing the dependence of the output voltage of the power receiving device of each of the configurations shown in FIG. **4** and FIG. **7** on the electrode-to-electrode gap.
FIG. **12A** is a graph showing the dependence of the voltage between power transmitting electrodes on the electrode-to-electrode capacitance.
FIG. **12B** is a graph showing the dependence of the voltage between power receiving electrodes on the electrode-to-electrode capacitance.
FIG. **13A** is a diagram showing a first variation of a wireless power transmission system.
FIG. **13B** is a diagram showing a second variation of a wireless power transmission system.
FIG. **13C** is a diagram showing a third variation of a wireless power transmission system.

FIG. **13D** is a diagram showing a fourth variation of a wireless power transmission system.

FIG. **14A** is a diagram showing a variation of the matching circuit shown in FIG. **6A.**

FIG. **14B** is a diagram showing a variation of the matching circuit shown in FIG. **6B.**

FIG. **14C** is a diagram showing a variation of the matching circuit shown in FIG. **6C.**

FIG. **14D** is a diagram showing a variation of the matching circuit shown in FIG. **6D.**

FIG. **15** is a diagram showing advantageous effects of the matching circuits shown in FIG. **14A** to FIG. **14D.**

FIG. **16** is a diagram showing a variation of a configuration of a wireless power transmission system according to an exemplary embodiment of the present disclosure.

## DESCRIPTION OF EMBODIMENTS

(Findings forming basis for present disclosure)

Findings forming the basis for the present disclosure will be described before describing embodiments of the present disclosure.

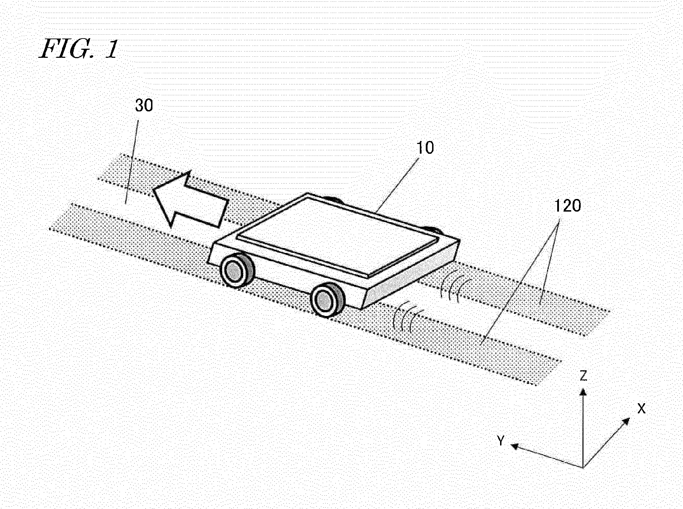

FIG. **1** is a diagram schematically showing an example of a wireless power transmission system of the electric field coupling method. The "electric field coupling method" refers to a method of power transmission in which electric power is wirelessly transmitted from a group of power transmitting electrodes including a plurality of power transmitting electrodes to a group of power receiving electrodes including a plurality of power receiving electrodes through electric field coupling (hereinafter referred to also as "capacitive coupling") between the group of power transmitting electrodes and the group of power receiving electrodes. For the sake of simplicity, an example where the group of power transmitting electrodes and the group of power receiving electrodes are each composed of a pair of two electrodes. The group of power transmitting electrodes and the group of power receiving electrodes may each include three or more electrodes. In that case, AC voltages of opposite phases are applied to any two electrodes adjacent to each other in each of the group of power transmitting electrodes and the group of power receiving electrodes.

The wireless power transmission system shown in FIG. **1** is a system for wirelessly transmitting electric power to a mobile object **10,** which is an automated guided vehicle (AGV). The mobile object **10** may be used for transporting articles in a factory or a warehouse, for example. In this system, a pair of flat plate-shaped power transmitting electrodes **120** are arranged on a floor surface **30.** The mobile object **10** includes a pair of power receiving electrodes opposing the pair of power transmitting electrodes **120** when electric power is transmitted. The mobile object **10** uses the pair of power receiving electrodes to receive AC power transmitted from the pair of power transmitting electrodes **120.** The received electric power is supplied to a load of the mobile object **10,** such as a motor, a secondary battery or a capacitor for storing electricity. Thus, the mobile object **10** is driven or charged.

FIG. **1** shows XYZ coordinates representing the X, Y and Z directions that are orthogonal to each other. The illustrated XYZ coordinates will be used in the following description. The Y direction denotes the direction in which the power transmitting electrodes **120** extend, the Z direction denotes the direction that is perpendicular to the surface of the power transmitting electrodes **120,** and the X direction denotes the direction perpendicular to the Y direction and the Z direction, i.e., the width direction of the power transmitting electrodes **120.** Note that the directions of structures shown in the figures of the present application are determined in view of the ease of understanding of the description herein, and they do not in any way limit directions to be used when actually carrying out any embodiment of the present disclosure. Also, the shape and size of the whole or part of any structure illustrated in the figures do not limit the actual shape and size thereof.

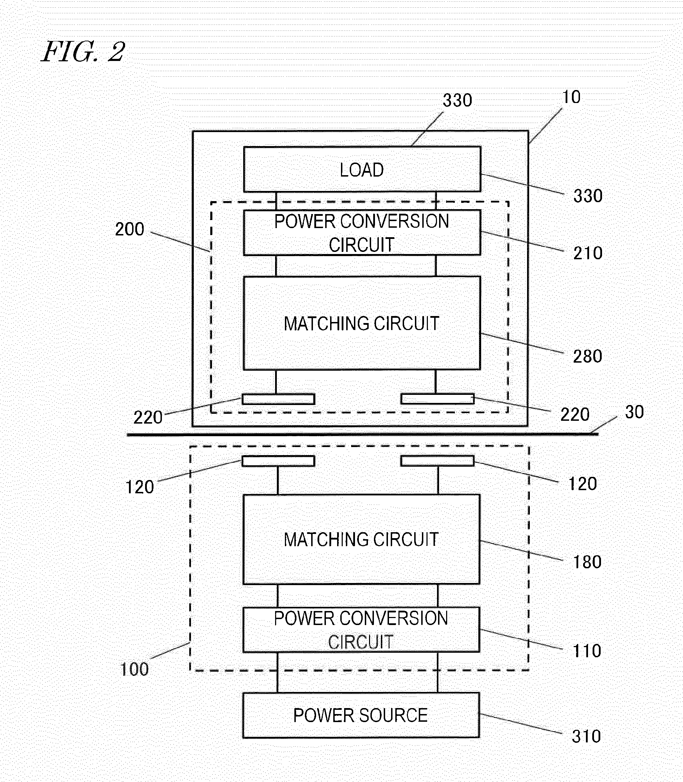

FIG. **2** is a diagram showing a general configuration of the wireless power transmission system shown in FIG. **1.** The wireless power transmission system includes a power transmitting device **100** and the mobile object **10.**

The power transmitting device **100** includes the pair of power transmitting electrodes **120,** a matching circuit **180,** and the power conversion circuit **110.** The power conversion circuit **110** converts the electric power output from the power source **310** into AC power for transmission, and outputs the converted power. The power conversion circuit **110** may include an AC output circuit such as an inverter circuit, for example. The power conversion circuit **110** converts the DC power supplied from the power source **310** into AC power, and outputs the converted power to the pair of power transmitting electrodes **120.** The power source **310** may be an AC power source. In that case, the power conversion circuit **110** converts the AC power supplied from the power source **310** into AC power of a different frequency or voltage, and outputs the converted power to the pair of power transmitting electrodes **120.** The matching circuit **180** is connected between the power conversion circuit **110** and the pair of power transmitting electrodes **120.** The matching circuit **180** improves the degree of impedance match between the power conversion circuit **110** and the pair of power transmitting electrodes **120.**

The mobile object **10** includes a power receiving device **200** and a load **330.** The power receiving device **200** includes a pair of power receiving electrodes **220,** a matching circuit **280,** and a power conversion circuit **210.** The power conversion circuit **210** converts the AC power received by the pair of power receiving electrodes **220** into electric power as requested by the load **330,** and supplies the converted power to the load **330.** The power conversion circuit **210** may include various circuits such as a rectifier circuit or a frequency conversion circuit, for example. The matching circuit **280** for reducing impedance mismatch is inserted between a power receiving electrodes **220** and the power conversion circuit **210**.

The load **330** is a component that consumes or stores electric power, such as a motor, a capacitor for storing electricity or a secondary battery, for example. Electric power is wirelessly transferred between the pair of power transmitting electrodes **120** and the pair of power receiving electrodes **220,** while they oppose each other, through electric field coupling therebetween. The transferred electric power is supplied to the load **330**.

In this example, the power transmitting electrodes **120** are arranged generally parallel to the floor surface **30**. The power transmitting electrodes **120** may be arranged so as to cross the floor surface **30**. For example, when installed on a wall, the power transmitting electrodes **120** may be arranged substantially vertical to the floor surface **30**. The power receiving electrodes **220** of the mobile object **10** may also be arranged so as to cross the floor surface so that the power receiving electrodes **220** oppose the power transmitting electrodes **120**. Thus, the arrangement of the power receiving electrodes **220** is determined according to the arrangement of the power transmitting electrodes **120**.

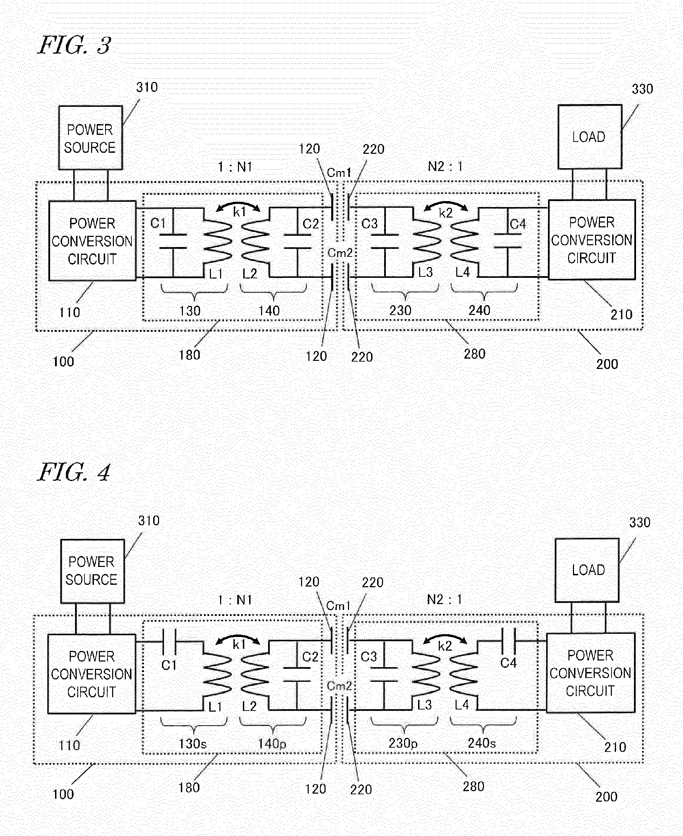

FIG. **3** is a diagram showing an example of a circuit configuration of the matching circuits **180** and **280**. This circuit configuration is similar to the configuration disclosed in Patent Document No. 2.

The matching circuit **180** of the power transmitting device **100** includes a first parallel resonance circuit **130** and a second parallel resonance circuit **140**. The first parallel resonance circuit **130** is connected to the power conversion circuit **110**. The second parallel resonance circuit **140** is arranged between the first parallel resonance circuit **130** and the pair of power transmitting electrodes **120**. The second parallel resonance circuit **140** is connected to the pair of power transmitting electrodes **120,** and magnetically couples to the first parallel resonance circuit **130**. The first parallel resonance circuit **130** has a configuration in which the coil **L1** and the capacitor **C1** are connected in parallel to each other. The second parallel resonance circuit **140** has a configuration in which the coil **L2** and the capacitor **C2** are connected in parallel to each other. The coil **L1** and the coil **L2** together form a transformer with a coupling coefficient k1. The turns ratio (1:N1) between the coil **L1** and the coil **L2** is set to a value such that a desired transformation ratio is realized.

The matching circuit **280** of the power receiving device **200** includes a third parallel resonance circuit **230** and a fourth parallel resonance circuit **240**. The third parallel resonance circuit **230** is connected to the pair of power receiving electrodes **220**. The fourth parallel resonance circuit **240** is arranged between the third parallel resonance circuit **230** and the power conversion circuit **210,** and magnetically couples to the third parallel resonance circuit **230**. The power conversion circuit **210** converts the AC power output from the fourth parallel resonance circuit **240** into DC power, and supplies the converted power to the load **330**. The third parallel resonance circuit **230** has a configuration in which the coil **L3** and the capacitor **C3** are connected in parallel to each other. The fourth parallel resonance circuit **240** has a configuration in which the coil **L4** and the capacitor **C4** are connected in parallel to each other. The coil **L3** and the coil **L4** together form a transformer with a coupling coefficient k2. The turns ratio (N2:1) between the coil **L3** and the coil **L4** is set to a value such that a desired transformation ratio is realized.

The four parallel resonance circuits **130, 140, 230** and **240** have an equal resonance frequency, and the power conversion circuit **110** outputs AC power of a frequency equal to the resonance frequency thereof. Thus, the parallel resonance circuits **130, 140, 230** and **240** are in a resonant state when electric power is transferred.

The power transmitting electrodes **120** and the power receiving electrodes **220** are arranged so as to oppose each other while being close to each other. A dielectric having a high relative dielectric constant may be provided between the power transmitting electrodes **120** and the power receiving electrodes **220**. With such a configuration, the capacitances Cm1 and Cm2 between the two power transmitting electrodes **120** and the two power receiving electrodes **220** can be made as high as possible. The reason why electric power is transferred while the capacitances Cm1 and Cm2 are made as high as possible is to make it possible to stably transfer electric power even if the relative position between the power transmitting electrodes **120** and the power receiving electrodes **220** changes. When the capacitances Cm1 and Cm2 are very high, the input/output impedance of the electrodes **120** and **220** is far smaller than the input/output impedance of the parallel resonance circuits **230** and **240** at resonance. As a result, it is possible to reduce the fluctuation of the voltage given to the load **330** even if the relative position between the power transmitting electrodes **120** and the power receiving electrodes **220** changes and the capacitances Cm1 and Cm2 fluctuate.

Thus, with the configuration shown in FIG. **3,** there is a need to increase the capacitances Cm1 and Cm2 in order to reduce the input/output impedance of the electrodes **120** and **220**. Therefore, the distance between electrodes is decreased as much as possible, and a dielectric having a high dielectric constant is arranged between electrodes.

However, with such a configuration, there is a limitation on the relative positional relationship between the power transmitting device **100** and the power receiving device **200**. In order to realize applicability to a wide variety of applications, it is desired that it is possible to maintain a high transmission efficiency even when the gap between electrodes is left as being a gap rather than providing a dielectric therebetween. It is also desired that it is possible to maintain a high transmission efficiency even when the distance between the electrodes **120** and **220** is relatively long (e.g., 5 mm to several tens mm).

FIG. **4** shows an example of a circuit configuration that can solve the problem described above. In the example of FIG. **4,** each of the matching circuits **180** and **280** includes a combination of a series resonance circuit and a parallel resonance circuit. The matching circuit **180** of the power transmitting device **100** includes the series resonance circuit **130s** and the parallel resonance circuit **140p.** The matching circuit **280** of the power receiving device **200** includes the parallel resonance circuit **230p** and the series resonance circuit **240s.** With such a configuration, it is easy to realize impedance match even when the capacitance between the electrodes **120** and **220** is small.

With the configuration shown in FIG. **4,** it is possible to enhance the degree of impedance match and to improve the power transmission efficiency. However, with further in-depth study, the present inventor arrived at the configuration of a matching circuit with which it is possible to further improve the power transmission efficiency.

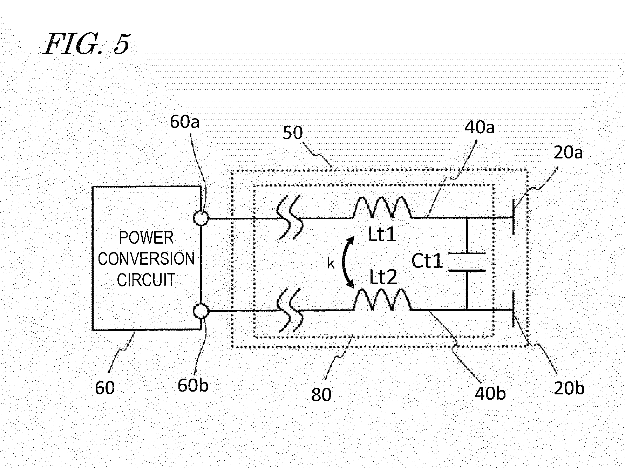

FIG. **5** is a diagram showing an example of a general configuration of an electrode unit including such a matching circuit and two electrodes. This electrode unit **50** is used in a power transmitting device or a power receiving device in a wireless power transmission system of the electric field coupling method. The electrode unit **50** includes a first electrode **20a** and a second electrode **20b,** which are a power transmitting electrode pair or a power receiving electrode pair, and a matching circuit **80.**

When electric power is transferred, voltages of opposite phases are applied to the electrodes **20a** and **20b.** The term "opposite phases" in the present specification means that the phase difference is greater than 90 degrees and less than 270 degrees. Typically, AC voltages whose phases are different from each other by about 180 degrees are applied to the electrodes **20a** and **20b.** The matching circuit **80** is connected between a power conversion circuit **60** and the electrodes **20a** and **20b** in a power transmitting device or a power receiving device.

The power conversion circuit **60** includes a first terminal **60a** and a second terminal **60b.** Where the power conversion circuit **60** is installed in a power transmitting device, the power conversion circuit **60** converts the electric power output from the power source into AC power for transmission, and outputs the converted power through the first terminal **60a** and the second terminal **60b.** Where the power conversion circuit **60** is installed in a power receiving device, the power conversion circuit **60** converts the AC power input to the first terminal **60a** and the second terminal **60b** into another form of electric power that is used by the load to output the converted power.

The matching circuit **80** includes a first inductor **Lt1** connected to the first electrode **20a,** a second inductor **Lt2** connected to the second electrode **20b,** and a first capacitor **Ct1.** The first capacitor **Ct1** is connected between a wire **40a** between the first electrode **20a** and the first inductor **Lt1** and a wire **40b** between the second electrode **20b** and the second inductor **Lt2.** The first capacitor **Ct1** may be referred to also as a "parallel capacitive element". At the terminal that is on the opposite side from the terminal connected to the first electrode **20a,** the first inductor **Lt1** is to be directly or indirectly connected to the first terminal **60a** of the power conversion circuit **60.** At the terminal that is on the opposite side from the terminal connected to the second electrode **20b,** the second inductor **Lt2** is to be directly or indirectly connected to the second terminal **60b** of the power conversion circuit **60.**

Between the power conversion circuit **60** and the inductor **Lt1** or **Lt2,** a circuit element such as another inductor, a capacitor, a filter circuit or a transformer may be inserted. In that case, the inductor **Lt1** or **Lt2** are indirectly connected to the terminal **60a** or **60b** of the power conversion circuit **60.**

By providing the electrode unit **50** having the configuration described above in at least one of the power transmitting device and the power receiving device, it is possible to further improve the power transmission efficiency as will be later described in detail.

The coupling coefficient k between the first inductor **Lt1** and the second inductor **Lt2** may be set to a value that satisfies -1<k<0, for example. As a result, the first inductor **Lt1** and the second inductor **Lt2** are able to function as a common mode choke filter. In that case, it is possible to reduce common mode noise in the transmission frequency or in a low-order harmonic band. In this case, the resonator formed of the first inductor **Lt1,** the second inductor **Lt2** and the first capacitor **Ct1** may be referred to as a "common mode choke resonator".

A reference sign such as Lt1 and Lt2 representing an inductor will be used, in the following description, also as a sign representing the inductance value of the inductor. Similarly, a reference sign such as Ct1 representing a capacitor will be used also as a sign representing the capacitance value of the capacitor.

In the matching circuit **80** according to an embodiment of the present disclosure, the inductors **Lt1** and **Lt2** are magnetically coupled with the coupling coefficient k, and as a result, the leakage inductance generated in the pair of inductors **Lt1** and **Lt2** and the capacitance of the capacitor **Ct1** together form a resonance loop. The resonance frequency f0, the inductances Lt1 and Lt2 and the capacitance Ct1 of the common mode choke resonator satisfy the relationship of Expression 1 below.

[Expression 1]

$$f0 = \frac{1}{2\pi\sqrt{(Lt1+Lt2)Ct1}}$$

In actual design, strictly speaking, there may be a difference between the value of the expression above and the actual resonance frequency because of the influence of circuits to be added on the side of the power conversion circuit 60 and circuits to be added on the side of the electrodes 20a and 20b and the input/output impedance. Even in that case, the design is made such that the resonance frequency generally falls within an error range of 50% of the value of the expression above. The resonance frequency f0 of the common mode choke resonator and the transmission frequency f1 are set to be substantially equal to each other. Therefore, the frequency f1 of the AC power to be transmitted may be set to a value within a range of 0.5 to 1.5 times the value of f0 shown in Expression 1, for example.

In the common mode choke resonator, the inductances Lt1 and Lt2 are set to values that are substantially equal to each other, for example. Assuming that the range of manufacture variation of inductors in general is within ±20%, the difference between the inductances Lt1 and Lt2 is set within 40%, for example. In other words, the difference between Lt1 and Lt2 is smaller than 0.4 times the average value of Lt1 and Lt2. More preferably, the difference between the inductances Lt1 and Lt2 is set within ±10%. In this case, the difference between Lt1 and Lt2 is smaller than 0.1 times the average value of Lt1 and Lt2. With the wireless power transmission system according to an embodiment of the present disclosure, with a limitation on the increase of the electrode area, it is preferred that the voltage phase difference between the electrode 20a and the electrode 20b, which are connected to the output terminal of the common mode choke resonator, is kept at 180 degrees, in order to transfer a large amount of electric power with a small area. Keeping the inductances Lt1 and Lt2 equal to each other leads to the maintenance of circuit symmetry in the wireless power transmission system of an embodiment of the present disclosure, resulting in more preferable effects.

The value of the capacitance value Ct1 of the first capacitor Ct1 is determined based on the relationship between Lt1 and Lt2 as described above.

When electric power is transferred, where V0 is the effective value of the voltage of the AC power output from the power conversion circuit 60 or the AC power input to the power conversion circuit 60, and V1 is the effective value of the voltage between the first electrode 20a and the second electrode 20b, V1/V0>2.14 is satisfied, for example. For example, the lower limit value 2.14 is the ratio that is obtained where the DC energy obtained by smoothing the AC energy supplied from a 200-V AC power source is used as the power source and where the line-to-line voltage difference is 600 V, which is the AC low voltage reference upper limit value. As another example, V1/V0>4.28 may be satisfied based on the ratio that is obtained where the DC energy obtained by smoothing the AC energy supplied from a 100-V AC power source is used as the power source and where the line-to-line voltage difference is 600 V, which is the AC low voltage reference upper limit value. As another example, V1/V0<50 may be satisfied based on the ratio that is obtained where the DC energy obtained by smoothing the AC energy supplied from a 100-V AC power source is used as the power source and where the line-to-line voltage difference is 7000 V, which is the AC high voltage reference upper limit value. As another example, V1/V0<25 may be satisfied based on the ratio that is obtained where the DC energy obtained by smoothing the AC energy supplied from a 200-V AC power source is used as the power source and where the line-to-line voltage difference is 7000 V, which is the AC high voltage reference upper limit value. Needless to say, even when the line-to-line voltage difference takes a value greater than or equal to 7000 V, which corresponds to the special high voltage reference, if safety measures are taken, there is no limitation on the upper limit of the range V1/V0 in the design of an embodiment of the present disclosure. When the matching circuit 80 is provided in power transmitting device, the matching circuit 80 functions as a step-up circuit with a step-up ratio of V1/V2. When the matching circuit 80 is provided in the power receiving device, the matching circuit 80 functions as a high voltage circuit with a step-down ratio of V0/V1.

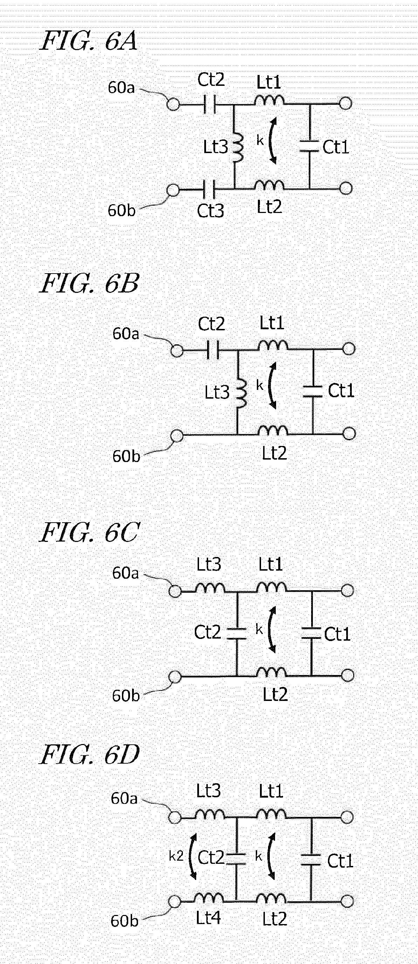

The matching circuit 80 may include circuit elements other than those shown in FIG. 5. Other examples of the matching circuit 80 will be described with reference to FIG. 6A to FIG. 6D.

FIG. 6A is a diagram showing a first variation of the matching circuit 80. The matching circuit 80 further includes a second capacitor Ct2, a third capacitor Ct3 and a third inductor Lt3. The second capacitor Ct2 is connected between the first inductor Lt1 and the first terminal 60a as a series circuit element. The third capacitor Ct3 is connected between the second inductor Lt2 and the second terminal 60b as a series circuit element. The third inductor Lt3 is connected, as a parallel circuit element, between a wire between the first inductor Lt1 and the second capacitor Ct2 and a wire between the second inductor Lt2 and the third capacitor Ct3. It can be said that this configuration is obtained by adding a high-pass filter having a symmetrical circuit configuration to the configuration shown in FIG. 5. With such a configuration, it is possible to further improve the transmission efficiency.

FIG. 6B is a diagram showing a second variation of the matching circuit 80. The matching circuit 80 further includes the second capacitor Ct2 and the third inductor Lt3. The second capacitor Ct2 is connected between the first inductor Lt1 and the first terminal 60a as a series circuit element. The third inductor Lt3 is connected, as a parallel circuit element, between a wire between the first inductor Lt1 and the second capacitor Ct2 and a wire between the second inductor Lt2 and the second terminal 60b. It can be said that this configuration is obtained by adding a high-pass filter having an asymmetrical circuit configuration to the preceding stage of the configuration of the matching circuit shown in FIG. 5.

As compared with the configuration of FIG. **6A,** it is possible to reduce the number of elements although the positive/negative symmetry of the circuit lowers, and also with such a configuration, it is possible to further improve the transmission efficiency.

FIG. **6C** is a diagram showing a third variation of the matching circuit **80.** The matching circuit **80** further includes the third inductor **Lt3** and the second capacitor **Ct2.** The third inductor **Lt3** is connected between the first inductor **Lt1** and the first terminal **60a** as a series circuit element. The second capacitor **Ct2** is connected, as a parallel circuit element, between a wire between the first inductor **Lt1** and the third inductor **Lt3** and a wire between the second inductor **Lt2** and the second terminal **60b.** It can be said that this configuration is obtained by adding a low-pass filter having an asymmetrical circuit configuration to the preceding stage of the configuration of the matching circuit shown in FIG. **5.** Also with such a configuration, it is possible to further improve the transmission efficiency.

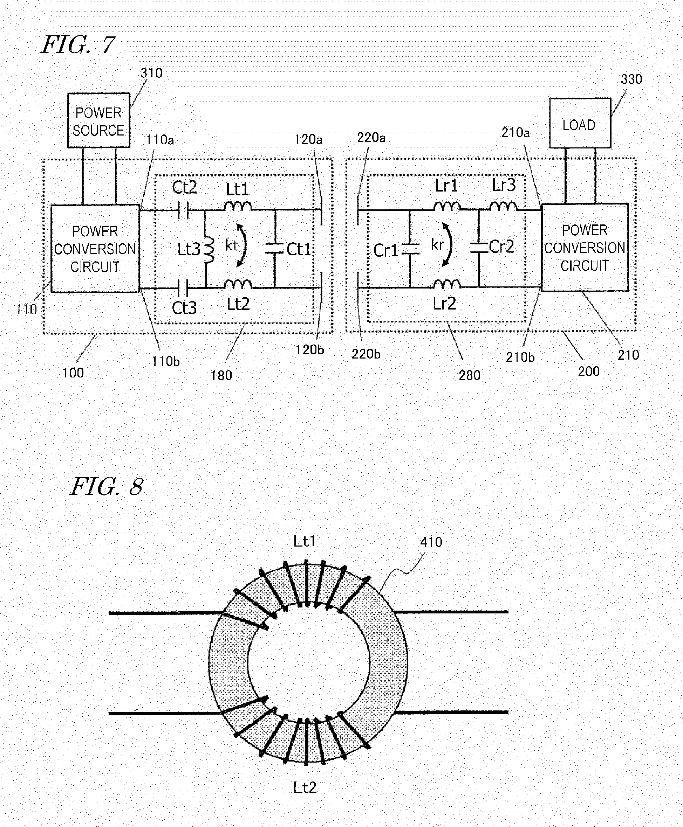

FIG. **6C** is a diagram showing a fourth variation of the matching circuit **80.** The matching circuit **80** includes the third inductor **Lt3,** the fourth inductor **Lt4** and the second capacitor **Ct2.** The third inductor **Lt3** is connected between the first inductor **Lt1** and the first terminal **60a** as a series circuit element. The fourth inductor **Lt4** is connected between the second inductor **Lt2** and the second terminal **60b** as a series circuit element. The second capacitor **Ct2** is connected, as a parallel circuit element, between a wire between the first inductor **Lt1** and the third inductor **Lt3** and a wire between the second inductor **Lt2** and the fourth inductor **Lt4.** The third inductor **Lt3** and the fourth inductor **Lt4** may be designed so that they are coupled together with a negative coupling coefficient, for example. It can be said that this configuration is obtained by adding a low-pass filter having a symmetrical circuit configuration to the configuration shown in FIG. **5.** Also with such a configuration, it is possible to further improve the transmission efficiency. Note that the configuration of FIG. **6D** can be regarded as being a configuration in which the common mode choke resonator shown in FIG. **7** is used in a multiple-stage connection. The number of stages of the common mode choke resonator to be connected is not limited to two, but it may be three or more.

Each of the matching circuits shown in FIGS. **5** to **6D** can be used in a power transmitting device or in a power receiving device. When a matching circuit is used in a power transmitting device, the two terminals shown on the right side of the figure are connected respectively to two power transmitting electrodes, and the terminals **60a** and **60b** may be terminals of an inverter circuit, for example. When a matching circuit is used in a power receiving device, the two terminals shown on the right side of the figure are connected to two power receiving electrodes, and the terminals **60a** and **60b** may be terminals of a rectifier circuit, for example.

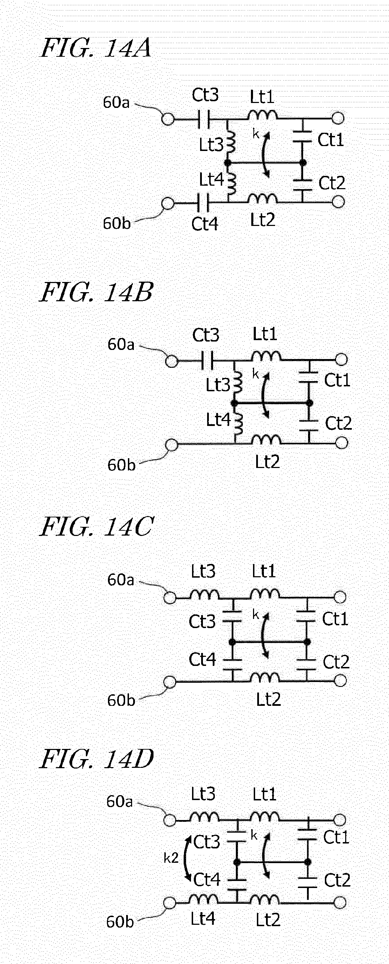

The matching circuits shown in FIGS. **6A** to **6D** can realize similar advantageous effects also when they are transformed into configurations shown in FIGS. **14A** to **14D,** respectively.

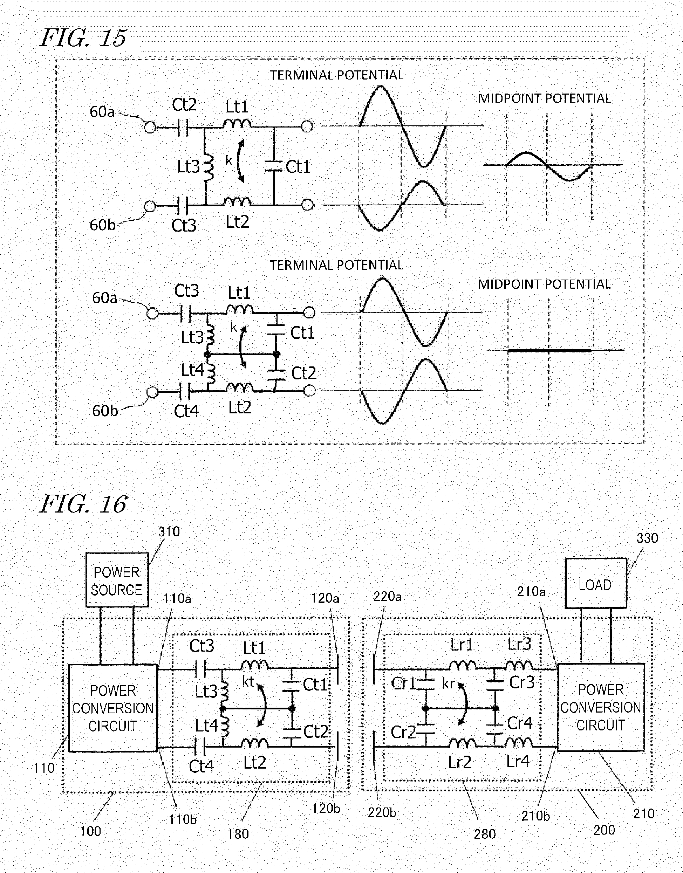

FIG. **14A** is a diagram showing a fifth variation of the matching circuit **80.** This matching circuit **80** has a configuration in which the inductor **Lt3** and the capacitor **Ct1** of FIG. **6A** are each divided in two, with the points of division connected to each other. With the matching circuit of FIG. **6A,** the amplitudes of the potentials generated at the terminals of the opposite poles may differ due to variations in characteristics of the parts used as the inductors **Lt1** and **Lt2.** In that case, as shown in the upper right of FIG. **15,** the radiation noise may become large because the midpoint potential fluctuates. In contrast, with the configuration of FIG. **14A,** the inductor **Lt3** and the inductor **Lt4** are set so that they have substantially the same inductance, and the capacitor **Ct1** and the capacitor **Ct2** are set so that they have substantially the same capacitance. Then, the midpoint potential can be forced to be substantially the same potential. For example, as shown in the lower half of FIG. **15,** the voltage amplitudes at the terminals can be made equal. Therefore, the electric fields generated by the potentials of the electrodes connected to the terminals can be canceled out, and it is possible to reduce the radiation noise. Herein, two values "being substantially the same" not only refers to cases where they coincide with each other strictly, but also includes cases where the ratio therebetween is within a range of about 0.9 to 1.1.

FIG. **14B** is a diagram showing a sixth variation of the matching circuit **80.** This matching circuit **80** has a configuration in which the inductor **Lt3** and the capacitor **Ct1** of FIG. **6B** are each divided in two, with the points of division connected to each other. With the configuration of FIG. **14B,** as with the configuration of FIG. **14A,** the voltage amplitudes at the terminals can be made equal. Therefore, the electric fields generated by the potentials of the electrodes connected to the terminals can be canceled out, and it is possible to reduce the radiation noise.

FIG. **14C** is a diagram showing a seventh variation of the matching circuit **80.** This matching circuit **80** has a configuration in which the capacitors **Ct2** and **Ct1** of FIG. **6C** are each divided in two, with the points of division connected to each other. With the configuration of FIG. **14C,** as with the configuration of FIG. **14A,** the voltage amplitudes at the terminals can be made equal. Therefore, the electric fields generated by the potentials of the electrodes connected to the terminals can be canceled out, and it is possible to reduce the radiation noise.

FIG. **14D** is a diagram showing an eighth variation of the matching circuit **80.** This matching circuit **80** has a configuration in which the capacitors **Ct2** and **Ct1** of FIG. **6C** are each divided in two, with the points of division connected to each other. With the configuration of FIG. **14D,** as with the configuration of FIG. **14A,** the voltage amplitudes at the terminals can be made equal. Therefore, the electric fields generated by the potentials of the electrodes connected to the terminals can be canceled out, and it is possible to reduce the radiation noise.

Note that the configuration of FIG. **14D** can be regarded as being a configuration in which the common mode choke resonator shown in FIG. **5** is used in a multiple-stage connection. The number of stages of the common mode choke resonator to be connected is not limited to two, but it may be three or more.

In the present specification, an electrode unit installed in the power transmitting device may be referred to as a "power transmitting electrode module" or a "power transmitting module", and an electrode unit installed in the power receiving device may be referred to as a "power receiving electrode module" or a "power receiving module". When the electrode unit is installed in the power transmitting device, the first electrode and the second electrode are referred to as power transmitting electrodes. When the electrode unit is installed in the power receiving device, the first electrode and the second electrode are referred to as power receiving electrodes. When electric power is transferred, a pair of power transmitting electrodes oppose a pair of power receiving electrodes. Electric power is transferred from the pair of power transmitting electrodes to the pair of power receiving electrodes via electric field coupling therebetween.

In each of the power transmitting module and the power receiving module, the first electrode and the second electrode may each be divided into a plurality of portions. The plurality of portions have a structure in which they extend in the same direction and may be arranged generally parallel to each other. AC voltages of the same phase are applied to the plurality of portions. AC voltages of opposite phases to each other are applied to any two adjacent portions of these electrodes. In other words, first electrode portions and second electrode portions are arranged to alternate with each other. With such a configuration, it is possible to also realize the effect of suppressing the leak electric field over the boundary between the first electrode and the second electrode. With a configuration in which at least one of the first and second electrodes is divided into two portions, there are essentially three or more electrodes that contribute to power transmission. When referring to such a configuration, the three electrodes will be referred to as "a group of electrodes".

A power transmitting device according to another aspect of the present disclosure includes the power transmitting module described above and the power conversion circuit. The power conversion circuit converts the electric power output from the power source into the AC power and outputs the converted power. The power conversion circuit in the power transmitting device may include an inverter circuit and a control circuit for controlling the inverter circuit, for example. The control circuit may control the inverter circuit to output a constant level of electric power.

A power receiving device according to still another aspect of the present disclosure includes the power receiving module described above and the power conversion circuit. The power conversion circuit converts the AC power output from the matching circuit into the other form of electric power and outputs the converted power. The power conversion circuit in the power receiving device includes a rectifier circuit, a DC-DC converter connected to the rectifier circuit, and a control circuit for controlling the DC-DC converter. The control circuit may perform a control so that a constant level of electric power is output from the DC-DC converter.

A wireless power transmission system according to still another aspect of the present disclosure includes the power transmitting device described above and the power receiving device described above. Power transmission via air may be done between at least two power transmitting electrodes in the power transmitting device and at least two power receiving electrodes in the power receiving device.

The present inventors found that particularly superior characteristic can be realized when the power transmitting device has a circuit configuration of a high-pass filter illustrated in FIG. **6A** or FIG. **6B** and the power receiving device has a circuit configuration of a low-pass filter illustrated in FIG. **6C** or FIG. **6D**. With such a configuration, even if the interval between the power transmitting electrode and the power receiving electrode fluctuates, it is possible to suppress the fluctuation of voltage between the power transmitting electrodes and between the power receiving electrodes, and to suppress the decrease in transmission efficiency.

Such a power transmitting module and such a power receiving module have the following configuration.

A power transmitting module according to one aspect of the present disclosure includes: a first electrode and a second electrode, which are a power transmitting electrode pair; and a matching circuit to be connected between a power conversion circuit and the first and second electrodes in the power transmitting device. The power conversion circuit includes a first terminal and a second terminal and converts electric power output from a power source into AC power for transmission to output the converted power from the first and second terminals. The matching circuit includes: a first inductor connected to the first electrode; a second inductor connected to the second electrode; a first capacitor connected between a wire between the first electrode and the first inductor and a wire between the second electrode and the second inductor; a second capacitor connected to the first inductor; and a third inductor connected between a wire between the first inductor and the second capacitor and a wire connected to the second inductor. On an opposite side from the first electrode, the second capacitor is to be directly or indirectly connected to the first terminal of the power conversion circuit. On an opposite side from the second electrode, the second inductor is to be directly or indirectly connected to the second terminal of the power conversion circuit.

The matching circuit in the power transmitting module further may include a third capacitor connected to the second inductor. The third inductor is connected between a wire between the first inductor and the second capacitor and a wire between the second inductor and the third capacitor. On an opposite side from the second electrode, the third capacitor is to be directly or indirectly connected to the second terminal of the power conversion circuit.

A power transmitting module according to another aspect of the present disclosure includes: a first electrode and a second electrode, which are a power transmitting electrode pair; and a matching circuit to be connected between a power conversion circuit and the first and second electrodes in the power transmitting device. The power conversion circuit includes a first terminal and a second terminal and converts electric power output from a power source into AC power for transmission to output the converted power from the first and second terminals. The matching circuit includes: a first inductor connected to the first electrode; a second inductor connected to the second electrode; a first capacitor connected between a wire between the first electrode and the first inductor and a wire between the second electrode and the second inductor; a third inductor connected to the first inductor; and a second capacitor connected between a wire between the first inductor and the third inductor and a wire connected to the second inductor. On an opposite side from the first electrode, the third inductor is to be directly or indirectly connected to the first terminal of the power conversion circuit. On an opposite side from the second electrode, the second inductor is to be directly or indirectly connected to the second terminal of the power conversion circuit.

The matching circuit may further include a fourth inductor connected to the second inductor. In that case, the second capacitor is connected between a wire between the first inductor and the third inductor and a wire between the second inductor and the fourth inductor. On an opposite side from the second electrode, the fourth inductor is to be directly or indirectly connected to the second terminal of the power conversion circuit.

A power receiving module according to another aspect of the present disclosure includes: a first electrode and a second electrode, which are a power receiving electrode pair; and a matching circuit to be connected between a power conversion circuit and the first and second electrodes in the power receiving device. The power conversion circuit includes a first terminal and a second terminal and converts AC power input to the first and second terminals into another form of electric power that is used by a load to output the converted power. The matching circuit includes: a first inductor connected to the first electrode; a second inductor connected to the second electrode; a first capacitor connected between a wire between the first electrode and the first inductor and a wire between the second electrode and the second inductor; a third inductor connected to the first inductor; and a second capacitor connected between a wire between the first inductor and the third inductor and a wire connected to the second inductor. On an opposite side from the first electrode, the third inductor is to be directly or indirectly connected to the first terminal of the power conversion circuit. On an opposite side from the second electrode, the second inductor is to be directly or indirectly connected to the second terminal of the power conversion circuit.

The matching circuit in the power receiving module may further include a fourth inductor connected to the second inductor. The second capacitor is connected between a wire between the first inductor and the third inductor and a wire between the second inductor and the fourth inductor. On an opposite side from the second electrode, the fourth inductor is to be directly or indirectly connected to the second terminal of the power conversion circuit.

A power receiving module according to another aspect of the present disclosure includes: a first electrode and a second electrode, which are a power receiving electrode pair; and a matching circuit to be connected between a power conversion circuit and the first and second electrodes in the power receiving device. The power conversion circuit includes a first terminal and a second terminal and converts AC power input to the first and second terminals into another form of electric power that is used by a load to output the converted power. The matching circuit includes: a first inductor connected to the first electrode; a second inductor connected to the second electrode; a first capacitor connected between a wire between the first electrode and the first inductor and a wire between the second electrode and the second inductor; a second capacitor connected to the first inductor; and a third inductor connected between a wire between the first inductor and the second capacitor and a wire connected to the second inductor. On an opposite side from the first electrode, the second capacitor is to be directly or indirectly connected to the first terminal of the power conversion circuit. On an opposite side from the second electrode, the second inductor is to be directly or indirectly connected to the second terminal of the power conversion circuit.

The matching circuit may further include a third capacitor connected to the second inductor. In that case, the third inductor is connected between a wire between the first inductor and the second capacitor and a wire between the second inductor and the third capacitor. On an opposite side from the second electrode, the third capacitor is to be directly or indirectly connected to the second terminal of the power conversion circuit.

The power receiving device may be installed on a mobile object, for example. The "mobile object" as used herein is not limited to a vehicle such as a transport robot set forth above, but refers to any movable object that is driven by electric power. The mobile object includes a powered vehicle that includes an electric motor and one or more wheels, for example. Such a vehicle can be an automated guided vehicle (AGV) such as a transport robot set forth above, an electric car (EV), an electric cart, or an electric wheelchair, for example. The "mobile object" as used herein also includes a movable object that does not include wheels. For example, the "mobile object" includes biped walking robots, unmanned aerial vehicles (UAVs, so-called "drones") such as multicopters, manned electric aircrafts, and elevators.

Embodiments of the present disclosure will now be described in greater detail. Note however that unnecessarily detailed descriptions may be omitted. For example, detailed descriptions on what are well known in the art and redundant descriptions on substantially the same configurations may be omitted. This is to prevent the following description from becoming unnecessarily redundant, to make it easier for a person of ordinary skill in the art to understand. Note that the present inventors provide the accompanying drawings and the following description in order for a person of ordinary skill in the art to sufficiently understand the present disclosure, and they are not intended to limit the subject matter set forth in the claims. In the following description, identical or similar components are denoted by the same reference signs.

(Embodiments)

FIG. **7** is a diagram showing a configuration of a wireless power transmission system according an exemplary embodiment of the present disclosure. The wireless power transmission system of the present embodiment is used in an application of a power supply for the mobile object **10** described above with reference to FIG. **1** and FIG. **2.**

The wireless power transmission system includes the power transmitting device **100** and the power receiving device **200.** FIG. **7** also shows the power source **310** and the load **330,** which are external elements to the present system. The power source **310** and the load **330** may be included in the wireless power transmission system.

The power transmitting device **100** includes the first power conversion circuit **110,** a first matching circuit **180** and two power transmitting electrodes **120a** and **120b.** The first matching circuit **180** is connected between the first power conversion circuit **110** and two power transmitting electrodes **120a** and **120b.** The first matching circuit **180** has a similar configuration to the configuration shown in FIG. **6A.** The first matching circuit **180** includes the inductors **Lt1, Lt2** and **Lt3** and the capacitors **Ct1, Ct2** and **Ct3.** The inductor **Lt1** is connected to the power transmitting electrode **120a.** The inductor **Lt2** is connected to the power transmitting electrode **120b.** The capacitor **Ct2** is connected between the inductor **Lt1** and one terminal **110a** of the power conversion circuit **110** in a series arrangement. The capacitor **Ct3** is connected between the inductor **Lt2** and the other terminal **110b** of the power conversion circuit **110** in a series arrangement. The capacitor **Ct1** is connected, in a parallel arrangement, between a wire between the electrode **120a** and the inductor **Lt1** and a wire between the electrode **120b** and the inductor **Lt2.** The inductor **Lt3** is connected, in a parallel arrangement, between a wire between the inductor **Lt1** and the capacitor **Ct2** and a wire between the inductor **Lt2** and the capacitor **Ct3.** Thus, the power transmitting electrode **120a,** the inductor **Lt1** and the capacitor **Ct2** are connected in series. The power transmitting electrode **120b,** the inductor **Lt2** and the capacitor **Ct3** are connected in series. The capacitor **Ct1** and the inductor **Lt3** are connected in parallel.

The power receiving device **200** includes two power receiving electrodes **220a** and **220b,** a second matching circuit **280** and a second power conversion circuit **210.** The second matching circuit **280** is connected between the two power receiving electrodes **220a** and **220b** and the second power conversion circuit **210.** The second matching circuit **280** has a similar configuration to the configuration shown in FIG. **6C.** The second matching circuit **280** includes the inductors **Lr1, Lr2** and **Lr3** and capacitors **Cr1** and **Cr2.** The inductor **Lr1** is connected to the power receiving electrode **220a.** The inductor **Lr2** is connected to the power receiving electrode **220b.** The capacitor **Cr1** is connected between a wire between the inductor **Lr1** and the power receiving electrode **220a** and a wire between the inductor **Lr2** and the power receiving electrode **220b.** The inductor **Lr3** is connected between the inductor **Lr1** and one terminal **210a** of the power conversion circuit **210.** The capacitor **Cr2** is connected between a wire between the inductor **Lr1** and the inductor **Lr3** and a wire between the inductor **Lr2** and the other terminal **210b** of the power conversion circuit **210.**

The components of the present embodiment will now be described in greater detail. In the following description, the power transmitting electrodes **120a** and **120b** may be referred to as "the power transmitting electrode **120"** without distinguishing them from each other. Similarly, the power receiving electrodes **220a** and **220b** may be referred to as "the power receiving electrode **120"** without distinguishing them from each other.

There is no particular limitation on the sizes of the housing of the mobile object **10,** the power transmitting electrodes **120a** and **120b** and the power receiving electrodes **220a** and **220b** shown in FIG. **1,** and they may be set to the following sizes, for example. The lengths (sizes in the Y direction shown in FIG. **1**) of the power transmitting electrodes **120a** and **120b** may be set within a range of 50 cm to 20 m, for example. The widths (the size in the X direction shown in FIG. **1**) of the power transmitting electrodes **120a** and **120b** may be set within a range of 0.5 cm to 1 m, for example. The size of the housing of the mobile object **10** in the direction of travel and that in the transverse direction may each be set within a range of 20 cm to 5 m, for example. The length (the size in the direction of travel) of each of the power receiving electrodes **220a** and **220b** may be set within a range of 5 cm to 2 m, for example. The width (the size in the transverse direction) of each of the power receiving electrodes **220a** and **220b** may be set within a range of 2 cm to 2 m, for example. The gap between the pair of power transmitting electrodes and the gap between the pair of power receiving electrodes may be set within a range of 1 mm to 40 cm, for example. The distance between the power transmitting electrodes **120a** and **120b** and the power receiving electrodes **220a** and **220b** may be about 5 mm to 30 mm, for example. Note however that there is no limitation to these numerical ranges.

The load **330** may include a driving electric motor, a capacitor or a secondary battery for storing electricity, for example. The load **330** is driven or charged by the DC power output from the power conversion circuit **210**.

The electric motor may be any motor such as a DC motor, a permanent magnet synchronous motor, an induction motor, a stepper motor and a reluctance motor. The motor rotates the wheels of the mobile object **10** via shafts, gears, etc., to move the mobile object **10**. Depending on the type of the motor, the power conversion circuit **210** may include various types of circuits such as a rectifier circuit, an inverter circuit, a DC-DC converter, and a control circuit for controlling the inverter and the DC-DC converter. In order to drive an AC motor, the power conversion circuit **210** may include a converter circuit for directly converting the frequency of the received energy (i.e., AC power) to the frequency for driving the motor.

The power storage capacitor may be a high-capacity, low-resistance capacitor such as an electric double layer capacitor or a lithium ion capacitor, for example. By using such a capacitor as a condenser, it is possible to realize faster charging than when a secondary battery is used. A secondary battery such as a lithium ion battery may be used instead of a capacitor. In that case, more energy can be stored although charging will take longer. The mobile object **10** drives the motor using the electric power stored in a power storage capacitor or a secondary battery to move around.

As the mobile object **10** moves, the amount of electric power stored in the power storage capacitor or the secondary battery decreases. Therefore, recharging is needed to keep moving. In view of this, when the charging amount decreases below a predetermined threshold value while moving, the mobile object **10** moves close to the power transmitting device **100** for charging. The moving may be done under control of a central control device (not shown), or may be done by autonomous decision of the mobile object **10**. The power transmitting device **100** may be installed at a plurality of locations in a factory.

The matching circuit **180** of the power transmitting device **100** matches the output impedance of the power conversion circuit **110** and the input of the power transmitting electrodes **120a** and **120b** with each other. The inductor **Lt1** and the inductor **Lt2** may function as a common mode choke filter with a predetermined coupling coefficient. The inductance values of these inductors **Lt1** and **Lt2** are set to values that are substantially equal to each other.

FIG. **8** is a diagram schematically showing a configuration example of two inductors **Lt1** and **Lt2**. In this example, the two inductors **Lt1** and **Lt2** are wound around a core **410,** which is a ring-shaped or toroidal-shaped magnetic material. The core **410** may be a soft-magnetic ferrite core, for example. The inductors **Lt1** and **Lt2** are arranged in an orientation that realizes a negative coupling coefficient via the core **410**. Specifically, $-1 < k < 0$ where k is the coupling coefficient of the inductors **Lt1** and **Lt2**. As the coupling coefficient k is closer to -1, more desirable characteristics are realized in view of transmission efficiency. When currents of the same phase are input to the inductors **Lt1** and **Lt2** through the input/output terminals on the left side of FIG. **8,** currents of the same phase will not be output to the right-side output terminals on the right side of FIG. **8**. With such a configuration, it is possible to reduce the probability that a common mode noise, which may be generated in the preceding stage of the circuit, is transferred to subsequent stages.

The inductors **Lt1** and **Lt2** do not always need to have a structure as shown in FIG. **8**. Each of the inductors **Lt1** and **Lt2** may employ a hollow structure in order to realize a low loss characteristic. Note that the coupling coefficient can be measured by a method defined in JIS C5321, for example.

The capacitor **Ct1** may be designed so as to resonate between leakage inductances of the inductors **Lt1** and **Lt2**. The resonance frequency of the common mode choke resonance circuit formed by the inductors **Lt1** and **Lt2** and the capacitor **Ct1** may be designed to be a value that is equal to the frequency f1 of the AC power output from the power conversion circuit **110**. This resonance frequency may be set to a value within a range of about 50% to 150% of the transmission frequency f1, for example. The power transmission frequency f1 may be set to 50 Hz to 300 GHz, for example, to 20 kHz to 10 GHz in an example, to 20 kHz to 20 MHz in another example, and to 80 kHz to 14 MHz in yet another example.

The capacitors **Ct2** and **Ct3** and the inductor **Lt3** function as a high-pass filter. The capacitances of the capacitors **Ct2** and **Ct3** may be set to values greater than the capacitance of the capacitor **Ct1.** The inductance of the inductor **Lt3** may be set to a value smaller than the inductances of the inductors **Lt1** and **Lt2**.

The inductors **Lr1** and **Lr2** and the capacitor **Cr1** in the power receiving device **200** also have a similar configuration to the inductors **Lt1** and **Lt1** and the capacitor **Cr1** in the power transmitting device **100**. In an example, the coupling coefficient kr between the inductors **Lr1** and **Lr2** satisfies $-1 < kr < 0$. The inductor **Lr3** and the capacitor **Cr2** function as a low-pass filter. The inductance of the inductor **Lr3** may be set to a value smaller than the inductances of the inductors **Lr1** and **Lr2**. The capacitance of the capacitor **Cr2** may be set to a value greater than the capacitance of the capacitor **Cr1.**

Each of the inductors **Lt1, Lt2, Lt3, Lr1, Lr2** and **Lt3** may be a winding coil using a litz wire or a twisted wire formed of a material such as copper or aluminum, for example. A planar coil or a laminated coil formed on a circuit board may be used. Any type of a capacitor that has a chip shape or a lead shape, for example, may be used for the capacitors **Ct1, Ct2, Ct2, Cr1** and **Ct2.** Capacitance between two wires with air interposed therebetween may be used as the capacitors.

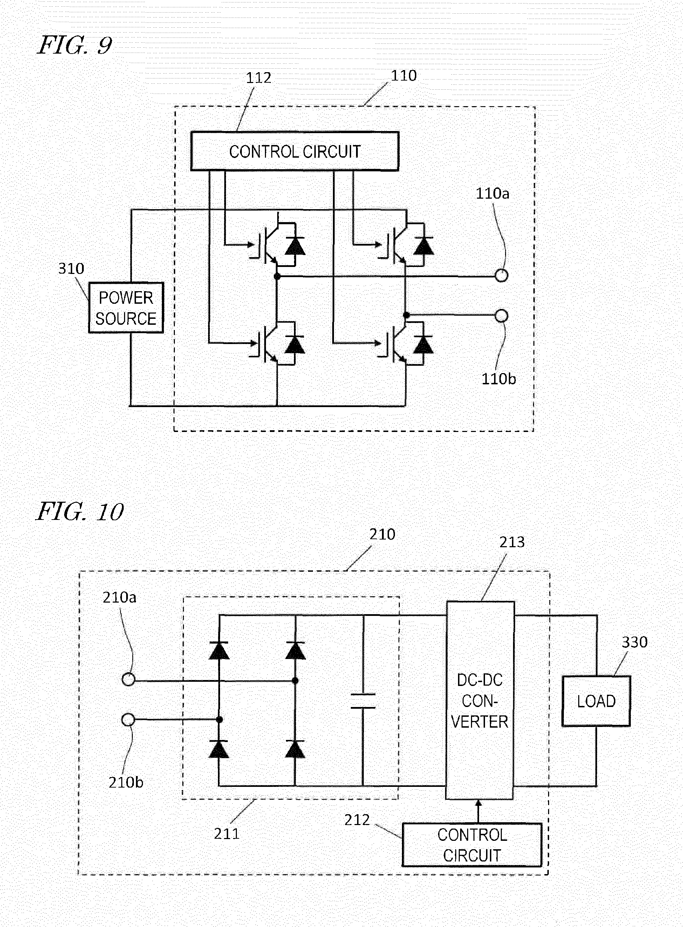

FIG. **9** is a diagram schematically showing a configuration example of the power conversion circuit **110** in the power transmitting device **100.** In this example, the power source **310** is a DC power source. The power conversion circuit **110** includes a full-bridge inverter circuit including four switching elements, and a control circuit **112.** Each switching element may be implemented by a transistor such as an IGBT or a MOSFET, for example. The control circuit **112** includes a gate driver that outputs a control signal for controlling the conductive (ON) state and the non-conductive (OFF) state of the switching elements, and a processor that causes the gate driver to output the control signal. The processor may be a CPU in a microcontroller unit (MCU), for example. A half-bridge inverter circuit or another oscillator circuit such as a class E may be used instead of a full-bridge inverter circuit shown in FIG. **9.**

The power conversion circuit **110** may include other elements such as a modulation/demodulation circuit for communication and various sensors for measuring the voltage, the current, etc. When the power conversion circuit **110** includes a modulation/demodulation circuit for communication, it is possible to transmit data to the power receiving device **200** while superimposing the data on AC power. When the power source **310** is an AC power source, the power conversion circuit **110** converts the input AC power into AC power for power transmission having a different frequency or voltage.

FIG. **10** is a diagram schematically showing a configuration example of the power conversion circuit **210** in the power receiving device **200.** In this example, the power conversion circuit **210** includes a rectifier circuit **211,** a DC-DC converter **213** and a control circuit **212.** The rectifier circuit **211** in this example is a full-wave rectifier circuit including a diode bridge and a smoothing capacitor. The DC-DC converter **213** converts the DC power output from the rectifier circuit **211** into another DC power as requested by the load **330.** The control circuit **212** controls the DC power output from the DC-DC converter **213.** The control circuit **212** controls the output electric power of the DC-DC converter **213** so as to keep it constant, for example. The control circuit **212** may be realized by a circuit including a processor and a memory such as a microcontroller unit (MCU), for example.

The power conversion circuit **210** may have another rectifier configuration. The power conversion circuit **210** may additionally include various circuits such as a constant voltage/constant current control circuit and a modulation/demodulation circuit for communication. The power conversion circuit **210** converts the received AC energy into DC energy that can be used by the load **330.**

Various sensors for measuring the voltage, the current, etc., may be included in the power conversion circuit **210.** When the energy used by the load **330** is AC energy, the power conversion circuit **210** is configured so as to output AC energy rather than DC.

The power source **310** may be any power source such as a commercial power source, a primary battery, a secondary battery, a solar battery, a fuel battery, a USB (Universal Serial Bus) power source, a high-capacity capacitor (e.g., an electric double layer capacitor), a voltage converter connected to a commercial power source, for example. The power source **310** may be a DC power source or an AC power source.

Next, advantageous effects of the present embodiment will be described.

In the present embodiment, as opposed to the examples shown in FIG. **3** and FIG. **4,** the matching circuits **180** and **280,** which are required to have a high-ratio step-up/step-down characteristic, do not have a configuration in which a transformer is inserted in series. In the examples of FIG. **3** and FIG. **4,** the inductance ratios L2/L1 and L3/L4 need to be set high in order to realize a high step-up ratio or step-down ratio. For example, in the example of FIG. **3,** the inductance ratios L2/L1 and L3/L4 can be values as high as about several tens. Also in the example of FIG. **4,** the inductance ratios L2/L1 and L3/L4 can be values of about 2 to 5. It is difficult to improve the Q value of an inductor having a low inductance, and there is a limitation on improving the Q value of an inductor having a high inductance. The loss from the insertion of a transformer is also strongly dependent on the amplitude of the coupling coefficient between inductors forming the transformer. Therefore, a pair of inductors are required to be coupled together strongly. In these examples, it is difficult to realize a low-loss transformer using a combination of low-loss inductors. Moreover, using an inductor having a high inductance leads to a decrease in the self-resonance frequency, which likely leads to a leakage of harmonic noise.

In contrast, in the embodiment shown in FIG. **7,** the inductances Lt1 and Lt2 are set to values that are substantially equal to each other, and the inductance Lr1 and Lr2 are also set to values that are substantially equal to each other. Inductors of generally equal inductances can easily be formed with generally equal sizes, e.g., inner diameters, and as a result, it is easy to enhance the coupling between the inductors. It also eliminates the restriction that a loss of one inductor results in a loss of the inductor pair as a whole. Thus, it is possible to easily realize a high-efficiency matching circuit using a combination of low-loss inductors.

Moreover, the present embodiment also realizes the effect of reducing noise. With the configuration where an inductor is inserted in series along a path that leads to each electrode, harmonic noise is suppressed. Particularly, when the coupling coefficient between the inductors **Lt1** and **Lt2** and the coupling coefficient between the inductors **Lr1** and **Lr2** are designed in the range of greater than -1 and less than -0, the noise suppressing effect becomes more pronounced.

Moreover in the present embodiment, the matching circuit **180** in the power transmitting device **100** includes a combination of a high-pass filter and a common mode choke resonator, and the matching circuit **280** in the power receiving device **200** includes a combination of a low-pass filter and a common mode choke resonator. It was found that with such a structure, it is possible to realize a stable power transmission characteristic even if the coupling capacitance between the power transmitting electrode **120** and the power receiving electrode **220** fluctuates. The fluctuation of the coupling capacitance occurs, for example, due to the fluctuation of the distance between the power transmitting electrode **120** and the power receiving electrode **220** (which may be referred to hereinafter as the "electrode-to-electrode gap" or the "electrode-to-electrode distance"). The fluctuation of the coupling capacitance does not always occur only due to the fluctuation of the electrode-to-electrode distance, but may occur also due to the fluctuation of the relative position between the transmitting and receiving electrodes in the X-axis direction, for example.

The present inventors conducted a simulation to check the change in the transmission characteristic when the coupling capacitance between electrodes is changed by changing the electrode-to-electrode gap for the configuration shown in FIG. **4** and the configuration shown in FIG. **7.**

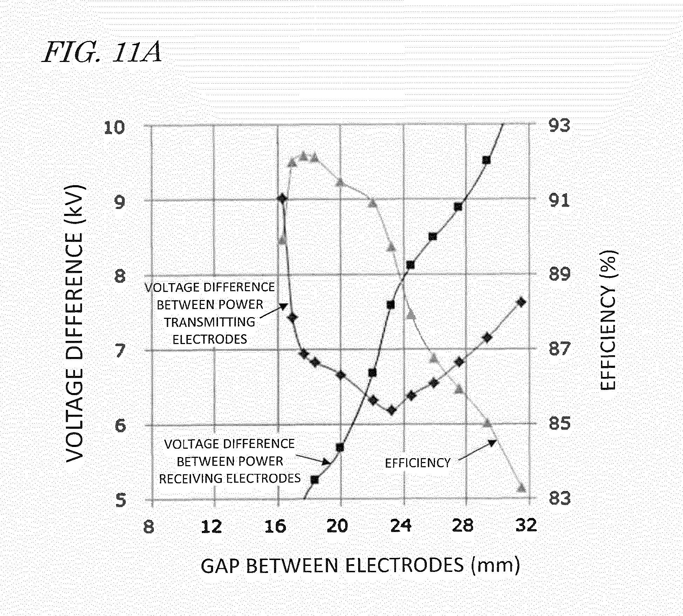

FIG. **11A** shows the simulation results obtained when the circuit configuration shown in FIG. **4** is employed. FIG. **11A** is a graph showing the electrode-to-electrode gap dependence of the voltage difference between power transmitting electrodes, the voltage difference between power receiving electrodes and the transmission efficiency. The simulation conditions in this example are as follows. The initial opposing distance between the transmitting and receiving electrodes was 22 mm, and the coupling capacitance between the transmitting and receiving electrodes in that case was 83 pF. The transmission frequency was 485 kHz, and the input DC voltage was 200 V. Characteristics are shown for a case where for the output electric power, a voltage conversion control was performed at the DC/DC converter **213** subsequent to the rectifier circuit **211** shown in FIG. **10** so that a constant electric power of 2 kW was output under each condition.

As shown in FIG. **11A,** in this example, when the electrode-to-electrode gap changes, the voltage difference between power transmitting electrodes, the voltage difference between power receiving electrodes and the efficiency fluctuate significantly. For example, the voltage difference between power receiving electrodes increases rapidly as the electrode-to-electrode gap increases. Conversely, as the electrode-to-electrode gap is decreased, the voltage difference between power transmitting electrodes increases rapidly. The increase in the electrode-to-electrode voltage difference can lead to deterioration of insulation in the power transmitting electrode and/or in the power receiving electrode. In order to solve this problem, it is necessary to increase the electrode area or to re-design the electrode-to-electrode distance to be narrower. However, either solution can significantly detract from the industrial applicability. As the electrode-to-electrode gap increases, the efficiency lowers and the amount of heat generation increases. As shown in FIG. **11A,** even when the electrode-to-electrode gap decreases to 16 mm, the efficiency decreases rapidly and the heat generation increases. Due to these characteristics, there is a limitation on the range of electrode-to-electrode gaps with which desirable characteristics are realized in operation.

The aspect that particularly hinders reduction in size of a circuit will be described in detail. Under the condition where the electrode-to-electrode gap is 30 mm in the figure, the voltage difference between power receiving electrodes reaches 10 kV. For example, in order to satisfy the AC high voltage reference upper limit value of 7 kV, the opposing capacitance between the transmitting and receiving electrodes needs to be increased to $(10/7)^2 \approx 2$ times. If it is not allowed to decrease the opposing distance between the transmitting and receiving electrodes, it is necessary to double the crossing area between the transmitting and receiving electrodes. This will lead to an increase the size of the circuit.

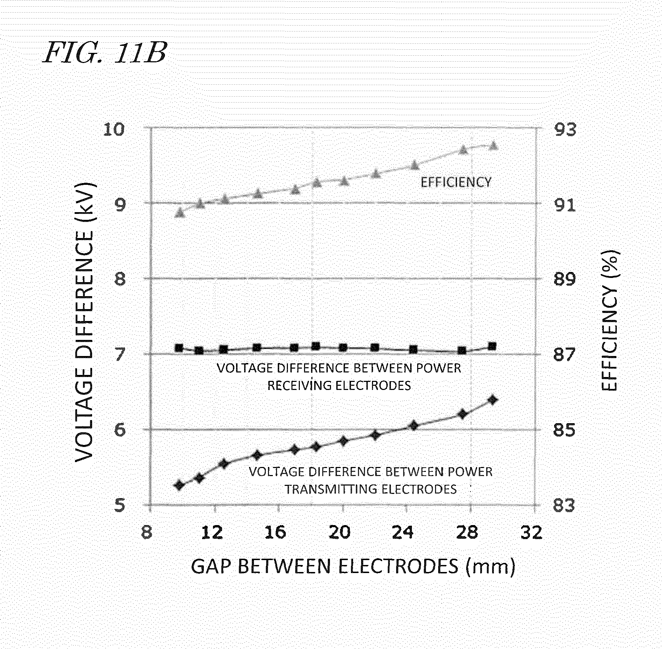

FIG. **11B** is a diagram showing the simulation result in a case where the configuration of the present embodiment shown in FIG. **7** is employed. The simulation conditions in this example are the same as the conditions of FIG. **11A.**

As shown in FIG. **11B,** in this example, the change in the voltage difference between power transmitting electrodes, the voltage difference between power receiving electrodes and the efficiency is small relative to the change in the electrode-to-electrode gap. Therefore, assuming a use in an application in which the range of fluctuation of the electrode-to-electrode gap is wide (e.g., 16 mm or more and 29 mm or less), the worst conditions are significantly eased compared with the characteristics of FIG. **11A** for both characteristics, i.e., the voltage difference between transmitting and receiving electrodes and the efficiency. Therefore, it is possible to easily avoid problems such as deterioration of insulation or worsening of heat radiation without taking a solution that detracts from the industrial applicability, such as increasing the crossing area between the transmitting and receiving electrodes or reducing the opposing distance between the transmitting and receiving electrodes. As compared with the characteristics of FIG. **11A,** the electrode-to-electrode voltage difference does not fluctuate significantly with the characteristics of FIG. **11B.** Therefore, it is easy to grasp the distribution of the electric field leaking around the power transmitting electrode and the power receiving electrode. For example, with the characteristics of FIG. **11A,** since the electrode-to-electrode voltage difference exhibits a complicated behavior, it is difficult to determine under which one of the conditions, i.e., the electrode-to-electrode gap being 16 mm, 22 mm and 28 mm, the leakage to peripheral devices becomes worst. On the other hand, with the characteristics of FIG. **11B,** the electrode-to-electrode voltage difference on the power receiving side is not dependent on the electrode-to-electrode gap but is substantially constant. The electrode-to-electrode voltage difference on the power transmitting side monotonously changes relative to the electrode-to-electrode gap, and the slope of the graph is more gentle as compared with the characteristics of FIG. **11A.** Therefore, the evaluation conditions for estimating the influence of interference on peripheral devices can be determined and addressed early, and one can expect the effect of reducing the development man-hour.

In the wireless power transmission system, various control parameters such as the input voltage and the transmission frequency may be used in order to control the output electric power or the output voltage. The advantageous effect that is characteristic of the present embodiment is effective for the strong dependence of the voltage difference therebetween the transmitting and receiving electrodes on the coupling capacitance between the transmitting and receiving electrodes under the condition of outputting a constant electric power. Particularly, a high applicability is achieved for a system for maintaining the output of a constant electric power by controlling the load resistance value on the output side. Therefore, as shown in FIG. **10,** in the wireless power transmission system of the present embodiment, the DC-DC converter **213** is connected to the output terminal of the rectifier circuit **211.**

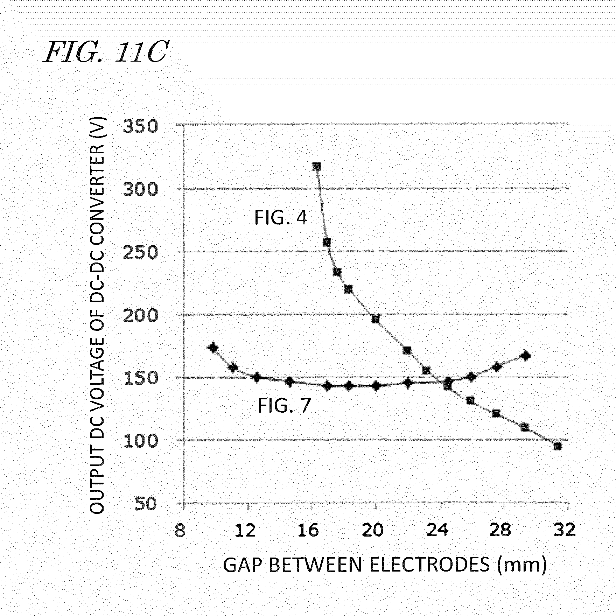

FIG. **11C** is a graph showing the electrode-to-electrode gap dependence of the output DC voltage of the rectifier circuit in the power receiving device for each of the conventional configuration shown in FIG. **4** and the configuration of the embodiment shown in FIG. **7.** In this example, the voltage to be output to the DC-DC converter in the configuration where the power receiving device includes a DC-DC converter in a subsequent stage of the rectifier circuit was calculated. The DC-DC converter was controlled so as to output a constant electric power of 2 kW. Conditions for driving FIG. **11C** are similar to FIGS. **11A** and **11B.**

As shown in FIG. **11C,** with the circuit configuration of the present embodiment, as compared with the conventional configuration, it is possible to suppress the change in the voltage input to the DC-DC converter even when the electrode-to-electrode gap changes during a control of outputting a constant electric power, for example. Since the operation voltage range of the DC-DC converter can be designed to be narrow, the internal operation frequency range is also limited. As a result, it is easy to take measures against noise that are to be necessary dependent on the frequency. Since it is possible to optimize the characteristics of the DC-DC converter for the narrow operation range, one can expect to increase the efficiency and reduce the heat generation of the DC-DC converter. With the configuration of the present embodiment, even if the electrode-to-electrode gap fluctuates, it is possible to operate the DC-DC converter with a voltage and a current that are substantially constant. Therefore, the conditions for suppressing the leakage electromagnetic field do not substantially change, and it is possible to reduce the research man-hour for reducing the electromagnetic noise.

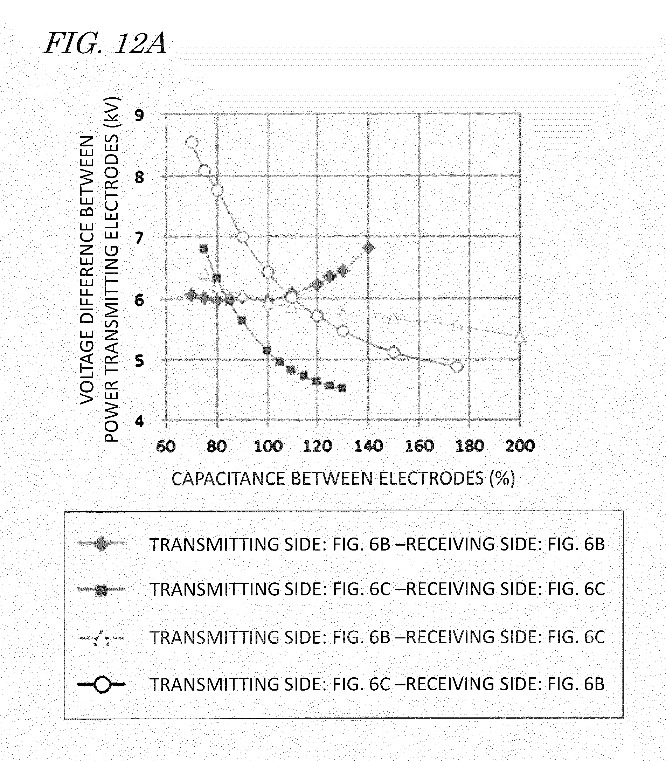

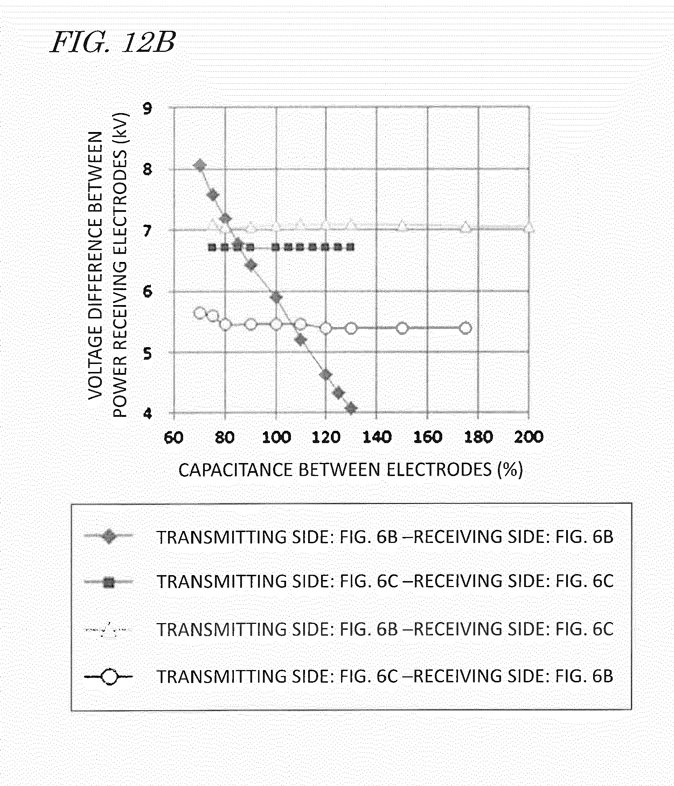

FIG. **12A** is a graph showing the results of calculating the change in the voltage difference between the power transmitting electrodes when the capacitance between the power transmitting electrode and the power receiving electrode changes for four different combinations of matching circuits. FIG. **12B** is a graph showing the results of calculating the change in the voltage difference between the power receiving electrodes when the capacitance between the power transmitting electrode and the power receiving electrode changes for four different combinations of matching circuits. The four combinations of matching circuits are as follows.

(1) power transmitting side: configuration in which high-pass filter and common mode choke resonator shown in FIG. 6B are connected in series, power receiving side: configuration in which high-pass filter and common mode choke resonator shown in FIG. **6B** are connected in series

(2) power transmitting side: configuration in which low-pass filter and common mode choke resonator shown in FIG. **6C** are connected in series, power receiving side: configuration in which low-pass filter and common mode choke resonator shown in FIG. **6C** are connected in series

(3) power transmitting side: configuration in which high-pass filter and common mode choke resonator shown in FIG. **6B** are connected in series, power receiving side: configuration in which low-pass filter and common mode choke resonator shown in FIG. **6B** are connected in series

(4) power transmitting side: configuration in which low-pass filter and common mode choke resonator shown in FIG. **6C** are connected in series, power receiving side: configuration in which high-pass filter and common mode choke resonator shown in FIG. **6B** are connected in series

Herein, the capacitance between the power transmitting electrode and the power receiving electrode is an index that is in inverse proportion to the electrode-to-electrode gap discussed in conjunction with FIGS. **11A** to **11C.** Considering the scene of application where the wireless power transmission system of the present embodiment is used, the capacitance between electrodes can easily change. This value may change easily for reasons such as, for example, occurrence of misalignment between the transmitting and receiving electrodes including charging while moving, a change in vehicle height due to a change in load weight when charging while loading and unloading, a change in the opposing distance between the transmitting and receiving electrodes dependent on the location due to warping of the installed floor surface, etc., and a change in the opposing distance between the transmitting and receiving electrodes due to wear of a wheel member over time. The value on the horizontal axis of FIG. **12A** and FIG. **12B** is normalized with 83 pF capacitance being 100%. The calculation conditions are similar to the example of FIG. **11.** That is, conditions used include a frequency of 485 kHz, an input DC voltage of 200 V and an output electric power of 2 kW.

From the results shown in FIG. **12A,** it can be seen that with a circuit configuration where the power transmitting device has a configuration in which the high-pass filter and the common mode choke resonator are connected in series as shown in FIG. **6B** and the power receiving device has a configuration in which the low-pass filter and the common mode choke resonator are connected in series as shown in FIG. **6C,** the voltage difference between the power transmitting electrodes exhibits a high stability against the fluctuation of the electrode-to-electrode capacitance. It can also be seen that even with a circuit configuration where the power transmitting device has a configuration in which the high-pass filter and the common mode choke resonator are connected in series as shown in FIG. **6B** and the power receiving device also has a configuration in which the high-pass filter and the common mode choke resonator are connected in series as shown in FIG. **6B,** the voltage difference between the power transmitting electrodes exhibits a high stability against the fluctuation of the electrode-to-electrode capacitance. Although not shown in FIG. **12A,** similar results are obtained also when a configuration obtained by substituting the configuration shown in FIG. **6B** with the configuration shown in FIG. **6A** or a configuration where the configuration shown in FIG. **6C** is substituted with FIG. **6D** is used.

From the results shown in FIG. **12B,** it can be seen that with a circuit configuration where the power transmitting device has a configuration in which the high-pass filter and the common mode choke resonator are connected in series as shown in FIG. **6B,** and the power receiving device has a configuration in which the low-pass filter and the common mode choke resonator are connected in series as shown in FIG. **6C,** the voltage difference between the power receiving electrodes exhibits a high stability against the fluctuation of the electrode-to-electrode capacitance. Also with a circuit configuration where the power transmitting device has a configuration in which the low-pass filter and the common mode choke resonator are connected in series as shown in FIG. **6C** and the power receiving device also has a configuration in which the low-pass filter and the common mode choke resonator are connected in series as shown in FIG. **6C,** the voltage difference between the power receiving electrodes exhibits a high stability against the fluctuation of the electrode-to-electrode capacitance. Also with a circuit configuration where the power transmitting device has a configuration in which the low-pass filter and the common mode choke resonator are connected in series as shown in FIG. **6C** and the power receiving device has a configuration in which the high-pass filter and the common mode choke resonator are connected in series as shown in FIG. **6B,** the voltage difference between the power transmitting electrodes exhibits a high stability against the fluctuation of the electrode-to-electrode capacitance. Although not shown in FIG. **12B,** similar results are obtained also when a configuration obtained by substituting the configuration shown in FIG. **6B** with the configuration shown in FIG. **6A** or a configuration where the configuration shown in FIG. **6C** is substituted with FIG. **6D** is used.

Summarizing the results shown in FIG. **12A** and FIG. **12B,** with a circuit configuration where the power transmitting device has a configuration in which the high-pass filter and the common mode choke resonator are connected in series and the power receiving device has a configuration in which the low-pass filter and the common mode choke resonator are connected in series, the voltage difference between the power transmitting electrodes and the voltage difference between the power receiving electrodes both exhibit a high stability against the fluctuation of the electrode-to-electrode capacitance.

Next, variations of the present embodiment will be described.

The matching circuits **180** and **280** are not limited to the configuration shown in FIG. 7, but many variations thereof are possible. Each of the matching circuits **180** and **280** may employ any of the various configurations as shown in FIG. **6A** to FIG. **6D,** for example. Among others, a configuration where the matching circuit **180** of the power transmitting device includes a high-pass filter circuit as shown in FIG. **6A** or FIG. **6B** and the matching circuit **280** of the power receiving device includes a low-pass filter circuit as shown in FIG. **6C** or FIG. **6D** has a high stability in the electrode-to-electrode voltage difference against the fluctuation of the electrode-to-electrode capacitance.

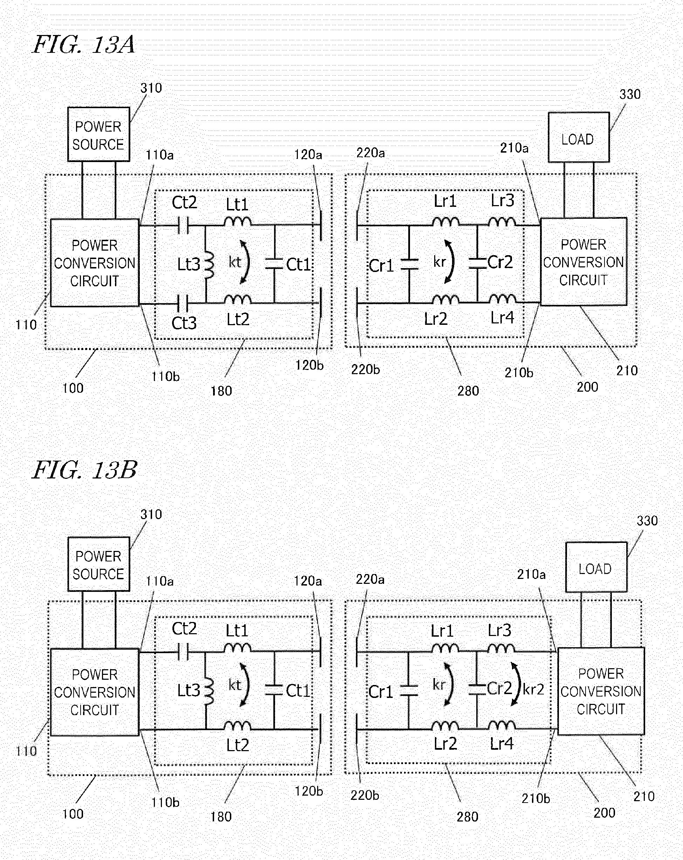

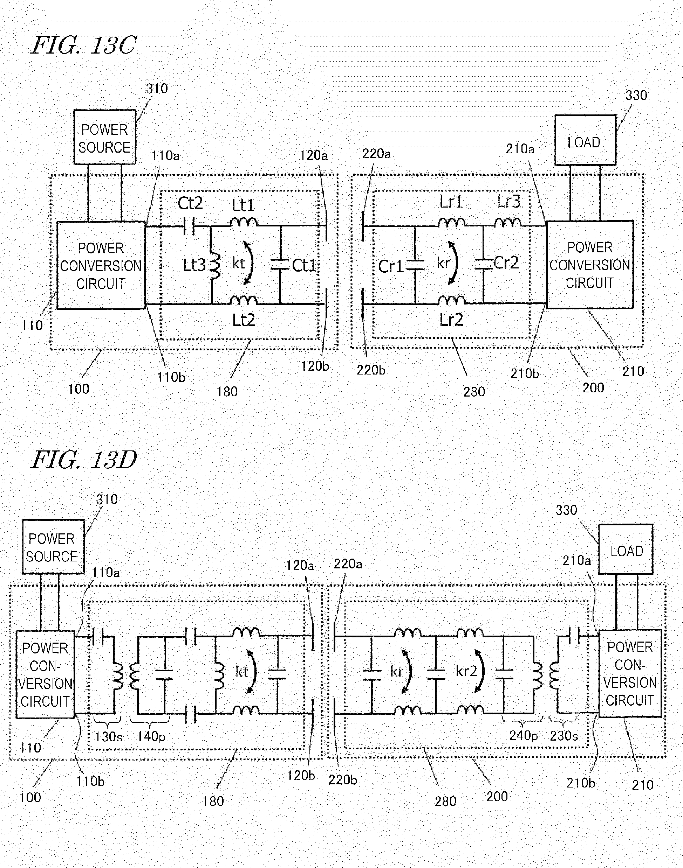

FIG. **13A** shows an example where the matching circuit **180** has a configuration shown in FIG. **6A** and the matching circuit **280** has a configuration shown in FIG. **6D.** FIG. **13B** shows an example where the matching circuit **180** has a configuration shown in FIG. **6B** and the matching circuit **280** has a configuration similar to FIG. **6D.** FIG. **13C** shows an example where the matching circuit **180** has the configuration shown in FIG. **6B** and the matching circuit **280** has the configuration shown in FIG. **6C.** With either configuration, it is possible to realize advantageous effects described above.

FIG. **13D** shows an example where the matching circuits **180** and **280** each have a configuration of a resonant circuit pair shown in FIG. **4** in addition to the configuration shown in FIG. **13A.** The matching circuit **180** on the power transmitting side includes the series resonance circuit **130s** and the parallel resonance circuit **140p** between the power conversion circuit **110** and the high-pass filter circuit. The matching circuit **280** on the power receiving side includes the series resonance circuit **230s** and the parallel resonance circuit **240p** between the power conversion circuit **210** and the low-pass filter circuit. By using transformers as described above, it becomes easy to increase the step-up ratio of the matching circuit **180** and the step-down ratio of the matching circuit 280.

The matching circuits **180** and **280** of the embodiments described above may include, in addition to the circuit elements shown in the figures, other circuit elements, e.g., a circuit network that serves a filter function, etc. In the figures, each element that is represented as one inductor or one capacitor may be a collection of a plurality of inductors or a plurality of capacitors. For example, as shown in FIG. **14A** to FIG. **14D,** the configuration may be a configuration in which an inductor is divided into two inductors having inductances that are equivalent to each other and a capacitor is divided into two capacitors having capacitances that are equivalent to each other, and the points of division are connected to each other. Then, it is possible to reduce radiation noise.

FIG. **16** shows an example of such a configuration. In this example, the matching circuit **180** in the power transmitting device **100** has a configuration shown in FIG. **14A,** and the matching circuit **280** in the power receiving device **200** has a configuration shown in FIG. **14D.** The matching circuit **180** may have a configuration other than that of FIG. **14A,** and the matching circuit **280** may have a configuration other than that of FIG. **14D.**

The electrodes of the embodiment described above have a structure where they extend parallel to each other in the same direction, but the structure does not need to be such a structure depending on the application. For example, the electrodes may have a rectangular shape such as a square shape. The technique of the present disclosure can be applied to any embodiment in which a plurality of electrodes having such a rectangular shape are arranged in one direction. Moreover, it is not an essential requirement that the surfaces of all the electrodes are on the same plane. Moreover, the surfaces of the electrodes do not need to have a completely planar shape, but may have a curved surface or a shape with protrusions/depressions, for example. Such a surface is also referred to as a "planar surface" as long as it is generally planar. The electrodes may be inclined with respect to the road surface.

The wireless power transmission system according to an embodiment of the present disclosure may be used as a system for transporting articles inside a factory, as described above. The mobile object **10** functions as a platform track that has a platform where articles are placed and autonomously moves around inside the factory to carry the articles to intended locations. However, the wireless power transmission system and the mobile object of the present disclosure are not limited to such an application, but may be used in various other applications. For example, the mobile object is not limited to an AGV, but may be another industrial machine, a service robot, an electric car, a forklift, a multicopter (drone), an elevator, or the like. For example, the wireless power transmission system can be used not only in a factory, but also in a shop, in a hospital, in a house, on a road, on a runway, and in any other place.

## INDUSTRIAL APPLICABILITY

The technique of the present disclosure can be used for any device that is driven by electric power. For example, it can be used for a mobile object such as an electric car (EV), an automated guided vehicle (AGV) used in a factory, a forklift, an unmanned aircraft (UAV), or an elevator.

## REFERENCE SIGNS LIST

| | |
|---|---|
| 10 | Mobile object |
| 20a, 20b | Electrode |
| 30 | Floor surface |
| 40a, 40b | Wire |
| 50 | Electrode unit |
| 60 | Power conversion circuit |
| 60a, 60b | Terminal |
| 80 | Matching circuit |
| 100 | Power transmitting device |
| 110 | Power conversion circuit |
| 120 | Power transmitting electrode |
| 130 | First parallel resonance circuit |
| 130s | Power transmitting-side series resonance circuit |
| 140 | Second parallel resonance circuit |
| 140p | Power transmitting-side parallel resonance circuit |
| 180 | Matching circuit |
| 200 | Power receiving device |
| 210 | Power conversion circuit |
| 220 | Power receiving electrode |
| 230 | Third parallel resonance circuit |
| 230p | Power receiving-side parallel resonance circuit |
| 240 | Fourth parallel resonance circuit |
| 240s | Power receiving-side series resonance circuit |
| 280 | Matching circuit |
| 310 | Power source |
| 330 | Load |

## Claims

1. A power transmitting module used in a power transmitting device in a wireless power transmission system of an electric field coupling method, the power transmitting module comprising:

a first electrode and a second electrode, which are a power transmitting electrode pair; and a matching circuit to be connected between a power conversion circuit and the first and second electrodes in the power transmitting device, wherein:

the power conversion circuit includes a first terminal and a second terminal, and converts electric power output from a power source into AC power for transmission and outputs the converted power from the first and second terminals; the matching circuit includes:

a first inductor connected to the first electrode; a second inductor connected to the second electrode; a first capacitor connected between a wire between the first electrode and the first inductor and a wire between the second electrode and the second inductor; a second capacitor connected to the first inductor; and a third inductor connected between a wire between the first inductor and the second capacitor and a wire connected to the second inductor;

on an opposite side from the first electrode, the second capacitor is to be directly or indirectly connected to the first terminal of the power conversion circuit; and on an opposite side from the second electrode, the second inductor is to be directly or indirectly connected to the second terminal of the power conversion circuit.

2. The power transmitting module according to claim 1, wherein:

the third inductor is divided into two inductors having substantially the same inductance; the first capacitor is divided into two capacitors having substantially the same capacitance; and a point of division between the two inductors and a point of division between the two capacitors are directly or indirectly connected to each other.

3. The power transmitting module according to claim 1 or 2, wherein:

the matching circuit further includes a third capacitor connected to the second inductor;

the third inductor is connected between a wire between the first inductor and the second capacitor and a wire between the second inductor and the third capacitor; and on an opposite side from the second electrode, the third capacitor is to be directly or indirectly connected to the second terminal of the power conversion circuit.

4. A power transmitting module used in a power transmitting device in a wireless power transmission system of an electric field coupling method, the power transmitting module comprising:

a first electrode and a second electrode, which are a power transmitting electrode pair; and a matching circuit to be connected between a power conversion circuit and the first and second electrodes in the power transmitting device, wherein:

the power conversion circuit includes a first terminal and a second terminal, and converts electric power output from a power source into AC power for transmission and outputs the converted power from the first and second terminals; the matching circuit includes:

a first inductor connected to the first electrode; a second inductor connected to the second electrode; a first capacitor connected between a wire between the first electrode and the first inductor and a wire between the second electrode and the second inductor; a third inductor connected to the first inductor; and a second capacitor connected between a wire between the first inductor and the third inductor and a wire connected to the second inductor;

on an opposite side from the first electrode, the third inductor is to be directly or indirectly connected to the first terminal of the power conversion circuit; and on an opposite side from the second electrode, the second inductor is to be directly or indirectly connected to the second terminal of the power conversion circuit.

5. The power transmitting module according to claim 4, wherein:

the first capacitor is divided into two capacitors having substantially the same capacitance;
the second capacitor is divided into two capacitors having substantially the same capacitance; and
a point of division of the first capacitor and a point of division of the second capacitor are directly or indirectly connected to each other.

6. The power transmitting module according to claim 4 or 5, wherein:

the matching circuit further includes a fourth inductor connected to the second inductor;
the second capacitor is connected between a wire between the first inductor and the third inductor and a wire between the second inductor and the fourth inductor; and
on an opposite side from the second electrode, the fourth inductor is to be directly or indirectly connected to the second terminal of the power conversion circuit.

7. The power transmitting module according to any one of claims 1 to 6, wherein a coupling coefficient k between the first inductor and the second inductor satisfies $-1<k<0$.

8. The power transmitting module according to any one of claims 1 to 7, wherein where f1 denotes a frequency of the AC power, Lt1 denotes an inductance value of the first inductor, Lt2 denotes an inductance value of the second inductor and Ct1 denotes a capacitance value of the first capacitor, the frequency f1 is set to a value within a range of 0.5 times to 1.5 times $1/(2\pi((Lt1+Lt2)Ct1)^{1/2})$.

9. The power transmitting module according to any one of claims 1 to 8, wherein where Lt1 denotes an inductance value of the first inductor and Lt2 denotes an inductance value of the second inductor, a difference between Lt1 and Lt2 is smaller than 0.4 times an average value of Lt1 and Lt2.

10. The power transmitting module according to any one of claims 1 to 9, wherein when electric power is transferred, where V0 denotes an effective value of a voltage of the AC power output from the power conversion circuit or the AC power input to the power conversion circuit and V1 denotes an effective value of a voltage between the first electrode and the second electrode, $2.14<V1/V0<50$ is satisfied.

11. A power receiving module used in a power receiving device in a wireless power transmission system of an electric field coupling method, the power receiving module comprising:

a first electrode and a second electrode, which are a power receiving electrode pair; and
a matching circuit to be connected between a power conversion circuit and the first and second electrodes in the power receiving device, wherein:

the power conversion circuit includes a first terminal and a second terminal, and converts AC power input to the first and second terminals into another form of electric power that is used by a load and outputs the converted power;
the matching circuit includes:

a first inductor connected to the first electrode;
a second inductor connected to the second electrode;
a first capacitor connected between a wire between the first electrode and the first inductor and a wire between the second electrode and the second inductor;
a third inductor connected to the first inductor; and
a second capacitor connected between a wire between the first inductor and the third inductor and a wire connected to the second inductor;

on an opposite side from the first electrode, the third inductor is to be directly or indirectly connected to the first terminal of the power conversion circuit; and
on an opposite side from the second electrode, the second inductor is to be directly or indirectly connected to the second terminal of the power conversion circuit.

12. The power receiving module according to claim 11, wherein:

the first capacitor is divided into two capacitors having substantially the same capacitance;
the second capacitor is divided into two capacitors having substantially the same capacitance; and
a point of division of the first capacitor and a point of division of the second capacitor are directly or indirectly connected to each other.

13. The power receiving module according to claim 11 or 12, wherein:

the matching circuit further includes a fourth inductor connected to the second inductor;
the second capacitor is connected between a wire between the first inductor and the third inductor and a wire between the second inductor and the fourth inductor; and
on an opposite side from the second electrode, the fourth inductor is to be directly or indirectly connected to the second terminal of the power conversion circuit.

14. A power receiving module used in a power receiving device in a wireless power transmission system of an electric field coupling method, the power receiving module comprising:

a first electrode and a second electrode, which are a power receiving electrode pair; and
a matching circuit to be connected between a power conversion circuit and the first and second electrodes in the power receiving device, wherein:

the power conversion circuit includes a first terminal and a second terminal, and converts AC power input to the first and second terminals into another form of electric power that is used by a load to output the converted power;
the matching circuit includes:

a first inductor connected to the first electrode;
a second inductor connected to the second electrode;
a first capacitor connected between a wire between the first electrode and the first inductor and a wire between the second electrode and the second inductor;
a second capacitor connected to the first inductor; and
a third inductor connected between a wire between the first inductor and the second capacitor and a wire connected to the second inductor;

on an opposite side from the first electrode, the second capacitor is to be directly or indirectly connected to the first terminal of the power conversion circuit; and
on an opposite side from the second electrode, the second inductor is to be directly or indirectly connected to the second terminal of the power conversion circuit.

15. The power receiving module according to claim 14, wherein:

the third inductor is divided into two inductors having substantially the same inductance;
the first capacitor is divided into two capacitors having substantially the same capacitance; and
a point of division between the two inductors and a point of division between the two capacitors are directly or indirectly connected to each other.

16. The power receiving module according to claim 14 or 15, wherein:

the matching circuit further includes a third capacitor connected to the second inductor;
the third inductor is connected between a wire between the first inductor and the second capacitor and a wire between the second inductor and the third capacitor; and
on an opposite side from the second electrode, the third capacitor is to be directly or indirectly connected to the second terminal of the power conversion circuit.

17. The power receiving module according to any one of claims 11 to 16, wherein a coupling coefficient k between the first inductor and the second inductor satisfies $-1<k<0$.

18. The power receiving module according to any one of claims 11 to 17, wherein where f1 denotes a frequency of the AC power, Lt1 denotes an inductance value of the first inductor, Lt2 denotes an inductance value of the second inductor and Ct1 denotes a capacitance value of the first capacitor, the frequency f1 is set to a value within a range of 0.5 times to 1.5 times $1/(2\pi((Lt1+Lt2)Ct1)^{1/2})$.

19. The power receiving module according to any one of claims 11 to 18, wherein where Lt1 denotes an inductance value of the first inductor and Lt2 denotes an inductance value of the second inductor, a difference between Lt1 and Lt2 is smaller than 0.4 times an average value of Lt1 and Lt2.

20. The power receiving module according to any one of claims 11 to 19, wherein when electric power is transferred, where V0 denotes an effective value of a voltage of the AC power output from the power conversion circuit or the AC power input to the power conversion circuit and V1 denotes an effective value of a voltage between the first electrode and the second electrode, $2.14<V1/V0<50$ is satisfied.

21. A power transmitting device comprising:

the power transmitting module according to any one of claims 1 to 10; and
the power conversion circuit.

22. The power transmitting device according to claim 21, wherein the power conversion circuit includes:

an inverter circuit; and
a control circuit for controlling the inverter circuit,
wherein the control circuit controls the inverter circuit to output a constant electric power.

23. A power receiving device comprising:

the power receiving module according to any one of claims 11 to 20; and
the power conversion circuit.

24. The power receiving device according to claim 23, wherein the power conversion circuit includes:

a rectifier circuit;
a DC-DC converter connected to the rectifier circuit; and
a control circuit for controlling the DC-DC converter,
wherein the control circuit controls the DC-DC converter to output a constant electric power.

25. A wireless power transmission system comprising:

the power transmitting device according to claim 21 or 22; and
the power receiving device according to claim 23 or 24.

26. The wireless power transmission system according to claim 25, wherein power is transferred between the first and second electrodes in the power transmitting device and the first and second electrodes in the power receiving device via air.

FIG. 1

## FIG. 2

FIG. 3

FIG. 4

FIG. 5

## FIG. 6A

## FIG. 6B

## FIG. 6C

## FIG. 6D

*FIG. 7*

*FIG. 8*

**FIG. 9**

**FIG. 10**

FIG. 11A

FIG. 11B

FIG. 11C

## FIG. 12A

X-axis: CAPACITANCE BETWEEN ELECTRODES (%)

Y-axis: VOLTAGE DIFFERENCE BETWEEN POWER TRANSMITTING ELECTRODES (kV)

TRANSMITTING SIDE: FIG. 6B –RECEIVING SIDE: FIG. 6B

TRANSMITTING SIDE: FIG. 6C –RECEIVING SIDE: FIG. 6C

TRANSMITTING SIDE: FIG. 6B –RECEIVING SIDE: FIG. 6C

TRANSMITTING SIDE: FIG. 6C –RECEIVING SIDE: FIG. 6B

*FIG. 12B*

**VOLTAGE DIFFERENCE BETWEEN POWER RECEIVING ELECTRODES (kV)** (y-axis)

**CAPACITANCE BETWEEN ELECTRODES (%)** (x-axis)

TRANSMITTING SIDE: FIG. 6B –RECEIVING SIDE: FIG. 6B

TRANSMITTING SIDE: FIG. 6C –RECEIVING SIDE: FIG. 6C

TRANSMITTING SIDE: FIG. 6B –RECEIVING SIDE: FIG. 6C

TRANSMITTING SIDE: FIG. 6C –RECEIVING SIDE: FIG. 6B

*FIG. 13A*

*FIG. 13B*

*FIG. 13C*

*FIG. 13D*

FIG. 14A

FIG. 14B

FIG. 14C

FIG. 14D

*FIG. 15*

*FIG. 16*

## INTERNATIONAL SEARCH REPORT

| International application No. |
| --- |
| PCT/JP2019/013789 |

A. CLASSIFICATION OF SUBJECT MATTER
Int. Cl. H02J50/05(2016.01)i, H02J50/70(2016.01)i

According to International Patent Classification (IPC) or to both national classification and IPC

B. FIELDS SEARCHED

Minimum documentation searched (classification system followed by classification symbols)
Int. Cl. H02J50/05, H02J50/70

Documentation searched other than minimum documentation to the extent that such documents are included in the fields searched

Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2013-219899 A (TOYOTA INDUSTRIES CORP.) 24 October 2013, paragraphs [0015]-[0057], fig. 1, 2 | 1, 3-4, 6-11, 13-14, 16-26 |
| A | (Family: none) | 2, 5, 12, 15 |
| Y | JP 2014-166063 A (TOYOTA MOTOR CORP.) 08 September 2014, paragraphs [0096]-[0103], fig. 9, 10 | 1, 3-4, 6-11, 13-14, 16-26 |
| A | (Family: none) | 2, 5, 12, 15 |
| Y | JP 6297218 B1 (MITSUBISHI ELECTRIC ENGINEERING CO., LTD.) 20 March 2018, fig. 3 (Family: none) | 1, 3-4, 6-11, 13-14, 16-26 |
| A |  | 2, 5, 12, 15 |
| Y | JP 2004-104507 A (HITACHI METALS, LTD.) 02 April 2004, fig. 2, 4 (Family: none) | 1, 3-4, 6-11, 13-14, 16-26 |
| A |  | 2, 5, 12, 15 |

☐ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 16.04.2019 | 23.04.2019 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013140665 A

- JP 2010193692 A